(19) Europäisches Patentamt

European Patent Office

Office européen des brevets

(11) **EP 1 164 723 A2**

(12) **EUROPEAN PATENT APPLICATION**

(43) Date of publication:
**19.12.2001 Bulletin 2001/51**

(51) Int Cl.[7]: **H04B 7/26**, H04Q 7/38,
H04J 13/00, H04B 1/707

(21) Application number: **01460036.5**

(22) Date of filing: **17.05.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Kerhuel, Samuel**<br>  **35700 Rennes (FR)**<br>• **Belaiche, Vincent Antoine Victor**<br>  **34280 La Grande Motte (FR)**<br>• **Voyer, Nicolas**<br>  **35700 Rennes (FR)** |
| (30) Priority: **23.05.2000 FR 0006531** | |
| (71) Applicant: **Mitsubishi Electric Telecom Europe (S.A.)**<br>**92741 Nanterre Cedex (FR)** | (74) Representative: **Ballot, Paul**<br>**Cabinet Ballot, 4 Rue Général Hoche**<br>**56100 Lorient (FR)** |

(54) **Method for the synchronization of at least one mobile station in a mobile telecommunication network with a modified synchronization channel structure**

(57)    The invention relates to a method for the synchronization of at least one mobile station with a base station within a mobile telecommunication network. According to the invention, it is proposed to intensify the synchronization signal at regular intervals during a short time interval called reinforced synchronization interval or RSI interval. The cycle of activity of the synchronization channel of the base station is thus increased on a time interval corresponding to the reinforced synchronization interval. This will reduce the effective time of acquisition of the synchronization signal and thereby reduce the size or number of time windows needed for this acquisition. The cycle of activity of the synchronization channel is increased by increasing the number of synchronization bursts during the RSI interval.

Application to UMTS-FDD type third-generation telecommunication networks.

**FIG.1**

EP 1 164 723 A2

**Description**

The invention relates to a method for the synchronization of at least one mobile station with a base station within a mobile telecommunications network. The invention can be applied especially in UMTS-FDD (Universal Mobile Telecommunication System-Frequency Division Duplex) type third-generation telecommunications networks.

In this type of network, a mobile station is synchronized with the base station of a cell of the network by means of two channels issued by the base station, a synchronization channel and a common communications channel called a CPICH (common pilot channel) channel. This synchronization operation consists in determining the time base of the base station of the cell and the scrambling code associated with it. The UMTS-FDD radio frames have a duration of 10 ms, that is 38400 chips, and can be subdivided into 15 successive time slots with a duration of about 666.67 µs each, giving 2560 chips. The operation of synchronization can be subdivided into three elementary steps designed respectively to determine the time base of the base station, the beginning of the UMTS-FDD radio frames sent and the associated scrambling code. The first two elementary steps are performed on the synchronization channel. The synchronization channel is constituted by two elementary channels sent simultaneously: the primary synchronization channel and the secondary synchronization channel conveying respectively the primary synchronization code and the secondary synchronization codes.

The primary synchronization code, referenced Cp, is a real code that is identical for all the cells of the UMTS-FDD network. It is sent identically on the in-phase component and the quadrature component in the form of a string of chips with a duration of about 66.67 µs, giving 256 chips, at the beginning of each time slot. Each of these strings of chips is called a primary synchronization burst. Typically, during the first elementary synchronization step, the mobile station filters the received signal by means of a digital correlation filter matched with the primary synchronization code. The correlation values at output of this filter are accumulated circularly with a period equal to the duration of a time slot. Thus, two correlation values temporally spaced-out by a time slot are added up together and contribute to the formation of one and the same correlation peak. Once the mobile station has managed to detect this primary code, it knows the beginning of the time slots of the radio frame since the primary code is sent at the beginning of each time slot. By contrast, since this code is the same for all the time slots of all the cells of the network, the mobile station knows neither the position of the time slot in the radio frame nor the cell from which it is receiving the primary synchronization channel.

The secondary synchronization codes are also real codes that are sent identically on the in-phase component and the quadrature component in the form of strings of chips with a duration of about 66.67 µs, giving 256 chips, at the beginning of each time slot simultaneously with the primary synchronization code. Each of these strings of chips is designated as a secondary synchronization burst. A synchronization burst results from the addition of a primary synchronization burst and a secondary synchronization burst sent simultaneously. A synchronization burst of this kind is therefore sent at the beginning of each time slot into the synchronization channel. There are 16 secondary synchronization codes possible. Each secondary synchronization code carries a respective piece of information known as a synchronization symbol taken out of a finite alphabet {1, 2, ..., 16}. The 16 secondary synchronization codes are obtained by taking the product, chip by chip, of a parent secondary code Cm common to all the secondary synchronization codes and a Walsh code $W_1$, $W_2$, ..., or $W_{16}$ proper to each synchronization symbol. The secondary synchronization channel of a cell is characterized by a sequence of 15 consecutive synchronization symbols corresponding to the secondary synchronization codes received during a radio frame (15 time slots). This sequence is repeated at each radio frame on the secondary synchronization channel. This sequence characterizes a group of eight scrambling codes. There are 64 possible groups of codes. The decoding of the secondary synchronization channel gives a part of the secondary synchronization signal comprising a portion or the totality of the sequence of synchronization symbols. This part then makes it possible to identify a group of scrambling codes and determine the position of the beginning of the radio frame. It must be noted that the mobile station does not necessarily need to decode a part enclosing 15 symbols. Three consecutive symbols are enough to determine the sequence entirely. However, to have sufficient decoding quality in the presence of disturbances, it is more prudent to consider a part of more than three elements of the sequence. The second elementary synchronization step thus makes it possible to determine the group of scrambling codes and the beginning of the frame. Once the group of codes is identified, the mobile station must determine the scrambling code of the cell. It can choose from among the eight scrambling codes of the group. The common pilot channel CPICH that conveys a known sequence of symbols to all the mobile stations previously scrambled with the scrambling code of the cell is "unscrambled" with each of the eight possible codes in order to retrieve the scrambling code used by the considered cell. The scrambling code of the cell is then identified. This is the aim of the third elementary synchronization step. Thus, whenever the mobile station has to get synchronized with a cell, it performs these three elementary steps.

An aim of the invention relates more particularly to the case of a mobile station that is already synchronized with a current cell but seeks to get synchronized with a new cell, generally an adjacent cell for the purpose for example of determining if there is reason to make a handover (or inter-cell transfer) to this new cell. There are then several possible situations depending on the state of operation (connected mode/standby mode) of the mobile station and the nature of the current cell (GSM/UMTS-FDD). Indeed, a mobile station is said to be in connected mode with a cell when it is communicating with the base station of this cell. The mobile station then goes into standby mode when the communication is terminated.

A first situation is the case where a mobile station in connected mode with a first UMTS-FDD cell at a certain carrier frequency seeks to get synchronized with a base station of a second UMTS-FDD cell using the same carrier frequency. The mobile station then, in addition to the signals coming from the first cell, receives the synchronization signals and the signals from the CPICH channel of the base station of the second cell. It then applies the above three elementary operations to these signals to get synchronized with the base station of the second cell.

A second situation is the case where a mobile station in connected mode with a first UMTS-FDD cell on a first carrier frequency seeks to get synchronized with the base station of a second UMTS-FDD cell using a second carrier frequency different from the first one. The network then provides for time windows in the radio link connecting the base station of the first cell to the mobile station, during which no signal travels between the two. The mobile station then has these time windows available to get synchronized with the base station of the second cell. The network opens these time windows by increasing the information bit rate before and/or after these time windows. These time windows are hereinafter designated by transmission gaps. The technique used to create a transmission gap by temporarily increasing the bit rate before and/or after this interval is hereinafter called the compressed mode.

A third situation is the case where a mobile station in connected mode with a GSM cell at a certain carrier frequency seeks to get synchronized with a base station of a UMTS-FDD cell. In connected mode, the data elements are transmitted in a multiframe-26 type GSM multiframe. A multiframe-26 consists of 26 consecutive GSM frames or TDMA frames. The structure of a multiframe-26 is such that one in every 26 GSM frames is vacant and left unoccupied to carry out measurements. Furthermore, it may happen that, in the current GSM frame, time slots are not used for data transmission. The mobile station can then use all these vacant time slots to get synchronized with the base station of a UMTS-FDD cell.

A fourth situation is the case where the mobile station is in standby mode on a UMTS-FDD cell. Even if the mobile station is not in connected mode with this cell, it continues to receive information from the network through this cell and has to be capable of getting synchronized with the base station of another cell if it moves in another cell. The mobile station must also make measurements on the neighbouring cells in order to see if it has not changed cells. It therefore needs to get synchronized with the neighbouring cell. During the standby mode, the mobile station therefore alternates between two modes: an active standby mode and a dormant mode. In dormant mode, most of the elements of the mobile station are no longer powered. This is in order to limit power consumption. In active standby mode, the mobile station performs the necessary measurements and listens to certain broadcasting channels. The mobile station goes into active standby mode at regular intervals during a time window of a length sufficient to make reliable measurements. The size of these time windows however is reduced to limit the power consumption of the mobile station.

A fifth situation is the case where the mobile station is in standby mode on a GSM cell. Even when it is on a GSM cell, a mobile station should be capable of receiving messages coming from a UMTS-FDD cell or of knowing if it is going from a GSM cell to a UMTS-FDD cell. As described here above, the mobile station must listen to the UMTS-FDD cell at regular intervals.

These five cases are summarized in the following table:

| Situation | Mode | Current type cell | Type of cell on which to get synchronized | Same carrier |
|---|---|---|---|---|
| 1 | Connected | UMTS-FDD | UMTS-FDD | Yes |
| 2 | | UMTS-FDD | | No |
| 2 | | GSM | | No |
| 4 | Standby | UMTS-FDD | | Not applicable |
| 5 | | GSM | | |

As explained here above, to reliably detect the synchronization of the neighbouring cells, it is necessary to have time windows available that are large enough to receive the greatest number possible of synchronization bursts. However, in connected mode, the making of the large time windows in the radio links raises a certain number of problems.

Hereinafter, the term "effective acquisition time" shall designate the time during which the synchronization signal is acquired. The "total acquisition time" is the time that elapses between the beginning and the end of the acquisition of the synchronization signal. The total acquisition time is greater than the effective acquisition time if the signal is acquired during several non-consecutive time intervals. Finally, the term "window time" designates the period of the time window used to carry out a measurement of synchronization or the sum of the periods of the time windows used if there are several of them.

The first problem relates to the loss of resources for the current cell. In the second case of the above table, the windows have to be created by the network by setting up transmission gaps to enable the mobile station to receive the synchronization bursts. During these transmission gaps, the mobile station cannot receive data coming from the current cell. This has an effect on the maximum bit rate of the radio link or on the quality of decoding its data elements, leading to a waste of useful resources. Furthermore, in the case No. 3, the GSM mobile stations have to carry out not only measurements on the UMTS-FDD cells but also measurements on the GSM cells. The measurement windows exist naturally in the GSM system and it is not necessary to set up transmission gaps. These windows consist of the time slots of the TDMA frames not used for the transmission of data with the mobile station and of the unoccupied TDMA frame within the multiframe-26. In this situation, the window time is therefore fixed. The greater the effective acquisition time required by the UMTS-FDD system, the smaller is the remaining window time for acquisitions with the GSM cells. The same type of problem arises with any mobile radio system permitting handovers to the UMTS-FDD system. It is therefore preferable for the effective acquisition time to be as short as possible.

Other problems also arise when the effective acquisition time is too great to be covered by a single time window. First of all, from one time window to the next one, the time bases of the mobile station and of the base station may drift, thereby lowering the efficiency of the synchronization. Thus, it is preferable for the total acquisition time to be as short as possible. Furthermore, the period between two successive time windows used to obtain one and the same synchronization is not always chosen in such a way that the end of the first window and the beginning of the second window occur at similar points in time in the frame. The mobile station must therefore take account of this shift in its synchronization algorithms to match the synchronization obtained for the successive windows. Furthermore, it is known that the second elementary synchronization step is all the more efficient as the number of synchronization bursts acquired is great. If the second elementary step uses several time windows, its performance is better when the radio frame parts covered by these time windows do not overlap or overlap as little as possible. Complying with this constraint then means that there is less flexibility for deciding on the instants of opening the time windows.

Finally, the use of several time windows raises another problem: for an effective acquisition time, the window time should be increased as compared with the case where the acquisition is done with a single time window. Indeed, when a mobile station opens a time window on a frequency different from the current frequency, the local oscillator of the mobile station takes a certain time to get stabilized at the new frequency. This time depends on the quality of the oscillator (and hence its cost of manufacture) and on the necessary frequency leap. Let $T_s$ be the stabilization time of the oscillator and $T_e$ the effective acquisition time needed to perform the synchronizing operation. By opening only one window, the necessary window time is $T_e + 2.T_s$, the factor 2 resulting from the fact that the frequency has to be changed twice in the time window, namely once at the beginning and once at the end of the time window. By opening two time windows, the necessary window time becomes $T_e + 4.T_s$. Thus, the division of a time window into n windows gives rise to a divergence between the window time and the effective acquisition time. This divergence is equal to $2n.T_s$.

It is an aim of the invention to reduce the effective acquisition time needed to perform the synchronization operation of the mobile station in order to accelerate the process of synchronization of this station with adjacent cells and reduce the size or number of the time windows to be made in the radio link with the current cell.

Thus, the invention relates to a method for the synchronization of at least one mobile station with a base station within a mobile telecommunication network, comprising a step for the generation, by said base station, of a basic synchronization signal comprising N synchronization bursts per radio frame, called basic synchronization bursts, a step for the transmission of said basic synchronization signal during at least one radio frame of a synchronization channel, each of said N basic synchronization bursts being associated with a time slot of said radio frame and being transmitted during a time interval at the beginning of said associated time slot, and a step for the reception and processing of said basic synchronization signal by said at least one mobile station, characterised in that it furthermore comprises a step for the generation of an additional synchronization signal intended to be transmitted with said basic synchronization signal during said step for the transmission of the basic synchronization signal, said additional synchronization signal comprising at least one synchronization burst, called additional synchronization burst, said at least one additional synchronization burst being transmitted during at least one time interval called reinforced synchronization interval or RSI interval, said at least one additional synchronization burst being furthermore non-overlapping with said basic synchronization bursts.

The additional synchronization bursts may reproduce basic synchronization bursts. Advantageously, each reinforced synchronization interval comprises at least one basic synchronization burst. Furthermore, the synchronization bursts are preferably distributed uniformly in said reinforced synchronization interval according to a time step and the duration of the reinforced synchronization interval is equal at most to 20% of that of the radio frame.

This method may be used to synchronize the mobile station with a new base station within an UMTS type mobile telecommunication network, the mobile station being already synchronized with a first base station of said network. In this application, each base station can selectively take a state corresponding to periods of transmission of useful signals, especially synchronization signals and data signals, to the mobile station and a state corresponding to periods called non-transmission intervals during which the base station stops transmitting useful signals to said mobile station. According to the invention, if the carrier frequency of the useful signals transmitted by the new base station is different from that of the useful signals transmitted by the first base station, the position of the non-transmission intervals from the first base station in the radio frame is determined so that the synchronization bursts of said reinforced synchronization interval proper to the new base station are transmitted by this new base station substantially during said non-transmission intervals.

In another application, the method is used to synchronize a mobile station with a base station within a UMTS type mobile telecommunication network, the mobile station being already synchronized with a first base station of a GSM type mobile telecommunication network. In this application, time windows are present in the multiframes of the GSM type mobile telecommunication network during which no useful signal is transmitted. According to the invention, the instants of occurrence of the reinforced synchronization intervals are determined so as to limit the period of time at the end of which a synchronization interval coincides substantially with a time window of the GSM multiframe.

In another application, the method is used to determine the position of a mobile station in a UMTS type mobile telecommunication network comprising at least three base stations. In this network, the base stations may selectively take a state corresponding to periods of transmission of useful signals, especially synchronization signals and data signals, to the mobile station and a state corresponding to periods called periods of silence during which no useful signal is transmitted. According to the invention, it is provided that:

- at least three base stations transmit synchronization bursts during respective reinforced synchronization intervals that are not systematically overlapping,
- the periods of silence of each of these base stations correspond to reinforced synchronization intervals for at least one of the remaining base stations, and
- the mobile station, through one of said at least three base stations, transmits information to a positioning unit of the mobile telecommunication network on the reception of the synchronization bursts of each of the reinforced synchronization intervals so that said positioning unit determines the position of said mobile station.

The invention also relates to a mobile telecommunication network comprising at least one mobile station and a plurality of base stations, each base station comprising means for the generation of a basic synchronization signal comprising N synchronization bursts per radio frame, called basic synchronization bursts, means for the transmission of said basic synchronization signal during at least one radio frame of a synchronization channel, each of said N synchronization bursts being associated with a time slot of said radio frame and being transmitted during a time interval at the beginning of said associated time slot, each mobile station furthermore comprising means for the reception and processing of said basic synchronization signal transmitted by one of said base stations to synchronize said mobile station with this base station, characterised in that it furthermore comprises means for the generation of an additional synchronization signal intended to be transmitted with said basic synchronization signal by said means of transmission of the basic synchronization signal, said additional synchronization signal comprising at least one synchronization burst, called additional synchronization burst, said at least one additional synchronization burst being transmitted during at least one time interval, called reinforced synchronization interval, said at least one additional synchronization burst being furthermore non-overlapping with said basic synchronization bursts.

BRIEF DESCRIPTION OF THE DRAWINGS

Other aspects, details of construction and advantages of the invention shall appear hereinafter in the description with reference to the figures:

- Figure 1, Figure 2, Figure 3 and Figure 4 illustrate a first embodiment of the synchronization method of the invention;
- Figure 5, Figure 6, Figure 7 and Figure 8 illustrate a second embodiment of the synchronization method of the invention;
- Figure 9 illustrates a third embodiment of the synchronization method of the invention;
- Figure 10 illustrates a fourth embodiment of the synchronization method of the invention;
- Figure 11 illustrates a fifth embodiment of the synchronization method of the invention;
- Figure 12, Figure 13, Figure 14, Figure 15 and Figure 16 illustrate an application of the method of the invention to determine the position of a mobile station in an UMTS-FDD network.

The invention, while preserving the general structure of the frame of the synchronization channel, proposes the intensification, at regular times, of the synchronization signal during a short time interval, herein after called a reinforced synchronization interval or RSI. Thus, if the cycle of activity of the synchronization channel of a base station is x%, the invention proposes to make it go to y%, with y>x, on a time interval corresponding to the reinforced synchronization interval. This will reduce the effective acquisition time of the synchronization signal and thereby reduce the size or number of time windows needed for this acquisition. In an UMTS network, the cycle of activity of the synchronization channels is presently 10%. According to the invention, it is proposed to increase it during the RSI intervals. The cycle of activity of the synchronization channel is increased by increasing the number of synchronization bursts transmitted per time unit during the RSI interval.

Preferably, the initial frame structure of the synchronization channel is kept. This is why, it is planned according to the invention to transmit, during the RSI interval, not only the known synchronization signal, hereinafter called the basic synchronization signal, but also an additional synchronization signal. The additional synchronization signal consists of one or more synchronization bursts called additional synchronization bursts hereinafter in the description. The process of the generation of these additional synchronization bursts is described further below. These additional synchronization bursts may be identical to bursts of the basic synchronization signal. Hereinafter in the description, the synchronization bursts of the basic synchronization signal are called basic synchronization bursts.

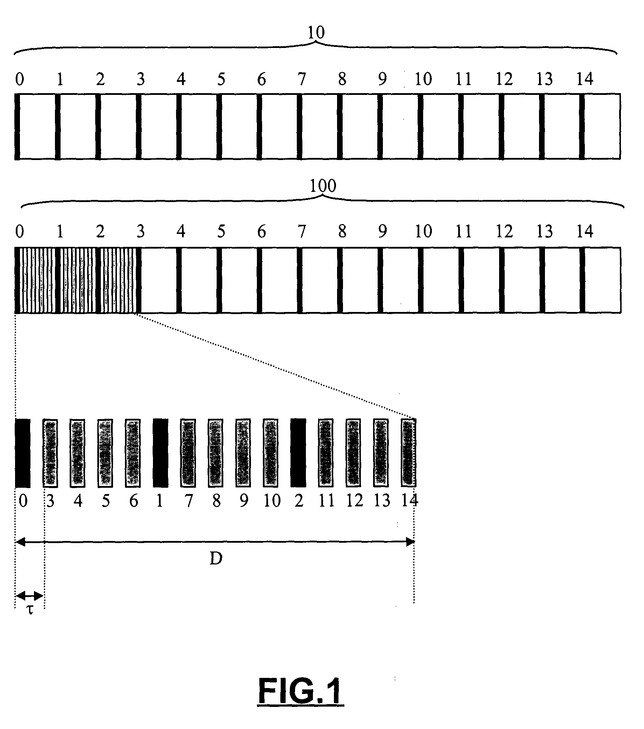

The additional synchronization bursts do not overlap one another, nor do they overlap the basic synchronization bursts. Figures 1, 2, 3 and 4 show the synchronization bursts generated in a first embodiment of the method of the invention. The upper part 10 of Figure 1 shows the synchronization bursts (corresponding to the basic synchronization bursts according to the invention) in a standard UMTS-FDD frame. The synchronization bursts generated according to the first embodiment are shown under the standard UMTS-FDD frame in a UMTS-FDD frame referenced 100. In this figure, $\tau$ represents the time lag between the beginning of the first time slot of the RSI interval and the first additional burst, as well as the time lag between two successive additional bursts in one and the same time slot. The time lag between the last additional synchronization burst of a time slot and the first additional synchronization burst of the following time slot is taken to be equal to $2.\tau$. Hereinafter, $\tau$ is called a time step and is expressed by a number of chips. Hereinafter, the starting time slot of an RSI interval designates the first time slot whose beginning coincides with or follows the beginning of the RSI interval. Thus, if t is the starting instant of the time slot of an RSI interval, then the additional synchronization bursts can begin only at instants of the $t+k.\tau$ type, where k is a relative integer. D represents the duration of the reinforced synchronization RSI interval. The duration of the RSI interval is preferably small as compared with the duration of a radio frame. For example, it is equal to 20% of the radio frame. In Figure 1, the reinforced synchronization interval extends from the beginning of the first time slot (number 0) of the radio frame up to the end of the third time slot (number 2). The first three time slots of the radio frame each comprise a basic synchronization burst and four additional synchronization bursts. The additional synchronization bursts correspond to the basic synchronization bursts of the other twelve time slots of the radio frame. In this figure, the time step $\tau$ is equal to 512 chips.

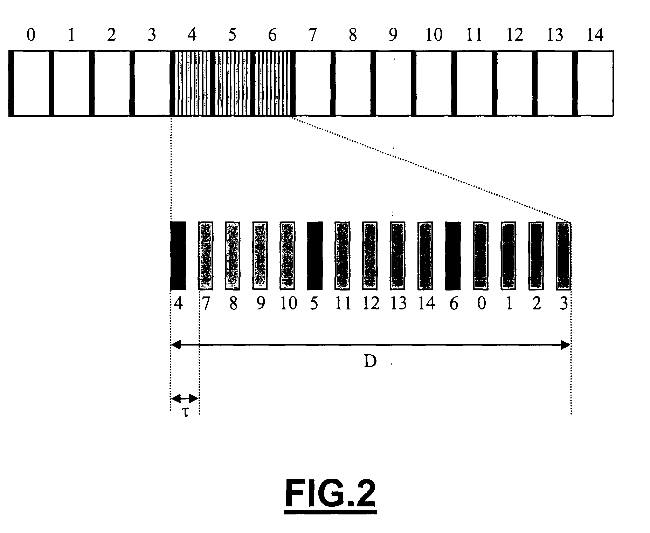

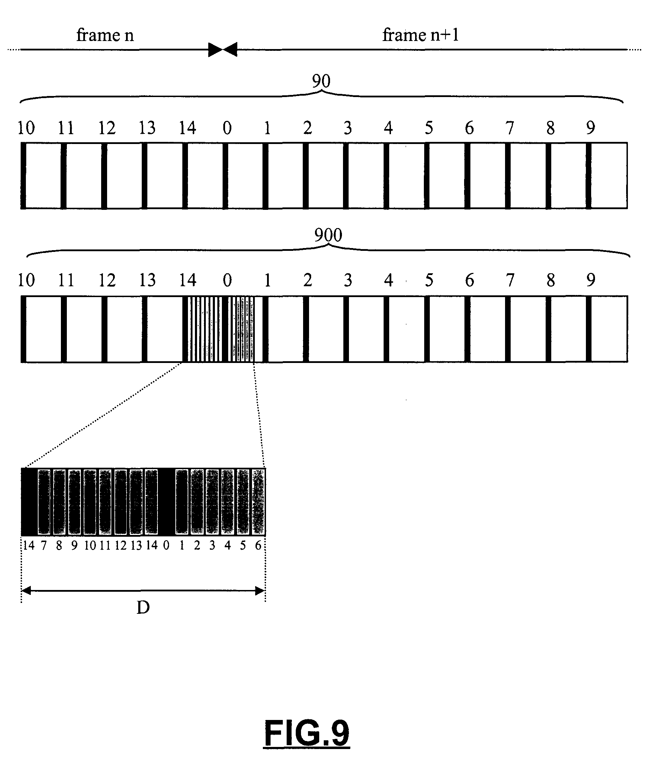

Advantageously, the period of occurrence, referenced T, of the RSI intervals may vary in time. Similarly, the position of the RSI interval in the frame may vary from one RSI interval to the other. In Figure 2, the beginning of the RSI interval is positioned at the beginning of the fifth time slot (number 4) of the radio frame. The reinforced synchronization interval is then positioned on the fourth, fifth and sixth time slots of the UMTS-FDD frame. It must be noted that an RSI interval is not necessarily included in a radio frame. It may straddle two consecutive radio frames. This case is illustrated in Figure 9 (described further below in the description).

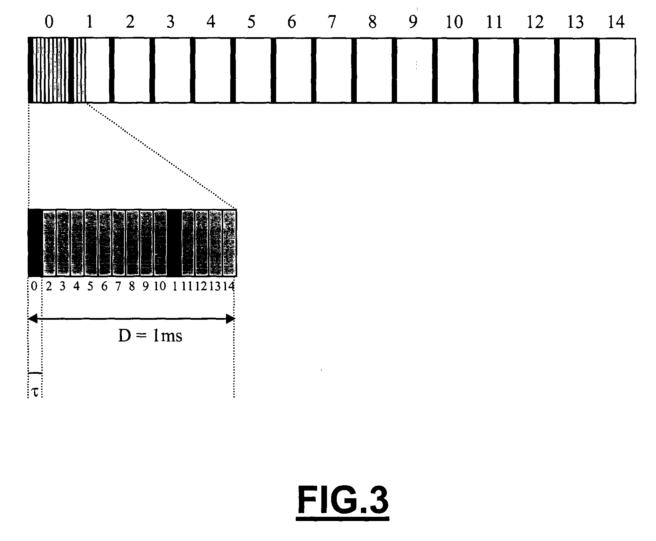

Furthermore, the time step $\tau$ has a minimum value of 256 chips so that the additional synchronization bursts do not overlap one another. Typically, the maximum value of $\tau$ is 512 chips (Figure 1). Figure 3 shows a case where $\tau$ is equal to 256 chips. The value 256 provides a maximum number $\gamma$ of synchronization bursts per time slot. In this figure, $\gamma = 10$. Thus, for an RSI interval containing a number c of 15 synchronization bursts, a time window with a duration of 1 ms is sufficient.

Hereinafter, $T_{TS}$ designates the duration of a time slot ($T_{TS}$ = 2560 chips $\approx$ 667.67 µs). Preferably, an RSI interval always begins at the beginning of a time slot. In this case, it is said that the granularity of the instant of occurrence is equal to $T_{TS}$, namely one time slot. The first synchronization burst of the RSI interval is therefore then a basic synchronization burst. The position of an RSI interval is therefore entirely defined by the number FN of the radio frame in which said RSI interval starts and by the number SLN of the time slot of this frame in which it starts.

As a variant, it may be planned not to place the beginning of the RSI interval at the beginning of a slot. It is then possible to define $\gamma$ positions of beginning of RSI interval in each time slot, $\gamma$ being an integer proper to the RSI interval and designating the number of synchronization bursts per time slot entirely included in this RSI interval. Thus, if t is the starting instant of the starting time slot of the RSI interval considered, then the RSI interval starts at one of the following instants: $t-(\gamma-1)\cdot\tau$, $t-(\gamma-2)\cdot\tau$,..., $t-\tau$, or t, in other words at $t-STN.\tau$ with $STN\in\{0, 1, ..., \gamma-1\}$. The position of an RSI interval is therefore entirely defined by the FN number of the radio frame in which the starting time slot is located, the SLN number of the starting time slot in this frame and the STN number of the time steps between the beginning of the RSI interval and the beginning of its starting time slot. In this case, it is said that the granularity of the instant of occurrence of the RSI interval is equal to $\tau' = \frac{T_{TS}}{\gamma}$, namely one $\gamma$th of a time slot.

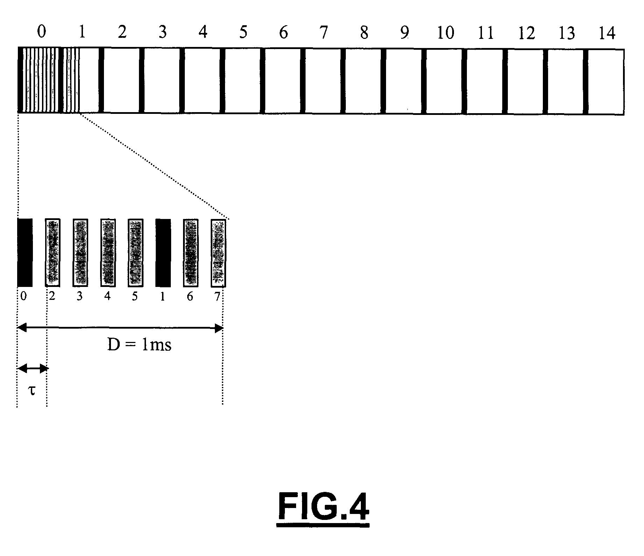

The duration of the RSI interval may also be variable. This makes it possible to reach various compromises: a long reinforced synchronization interval enables the mobile stations to acquire more synchronization bursts, thus improving the quality of the synchronization, but the trade-off here is that it is necessary to make bigger time windows so that the mobile stations can receive these synchronization bursts. The number c of synchronization bursts transmitted during an RSI interval varies according to the duration D of this interval and the time gap $\tau$ between the synchronization bursts. Figure 4 shows an RSI interval whose duration is limited to 1.5 time slots. In this example, the RSI interval comprises synchronization bursts of the first eight time slots of the radio frame and the time step $\tau$ is equal to 512 chips.

In order that the mobile stations of the network may have information available on the RSI intervals of the cells of the network, the network is responsible for sending each mobile station the following parameters relating to a given set of RSI intervals called an RSI string:

- the parameters $\tau$ and D: these parameters are common to all the RSI intervals of the RSI string considered;
- the period of occurrence T of the RSI intervals of the RSI string considered; T may be expressed as an integer number of time slots when the granularity of the instant of occurrence is equal to a time slot, else when the granularity is equal to one $\gamma$th of a time slot, T may be expressed as an integer number of times $\tau' = \dfrac{T_{TS}}{\gamma}$;
- the position of the first RSI interval of the RSI string considered, namely:

  - the number of the radio frame, referenced $FN_0$, in which it starts;
  - the number of its starting time slot, referenced $SLN_0$;
  - when the granularity of the instant of occurrence of the first RSI interval is equal to one $\gamma$th of a time slot, the number $STN_0$ of time steps between the beginning of the RSI interval and the beginning of its starting time slot;

- the number IN of RSI intervals within the RSI string considered; this number may be either a finite integer, or $+\infty$; IN=$+\infty$ means that the RSI string has RSI intervals in accordance with the above parameters until the network reports new parameters. The value IN=$+\infty$ is for example the default value if no parameter IN has been transmitted.

If $t_{F0}$ is the instant of the starting of the zero number radio frame and if $T_F$ designates the duration of a radio frame, then the starting instant $T_0$ of the first RSI interval of the RSI string considered is given by the following formula:

$$t_0 = t_{F0} + FN_0 \cdot T_F + SLN_0 \cdot T_{TS} - STN_0 \cdot \tau \tag{1}$$

When the granularity of the instants of occurrence of the RSI intervals is equal to a time slot, then the instants of occurrence are exactly periodic, namely the instant of occurrence $t_n$ of the n numbered RSI interval of the RSI string, beginning with n = 0, is given simply by the following formula:

$$t_n = t_0 + n \cdot T \tag{2}$$

When the granularity is equal to one $\gamma$th of a time slot, the formula (2) above is generally only an approximation. Indeed, to simplify the making of the invention, the operation is restricted to a case where the time step $\tau$ is an integer number of chips. Hence, except for cases where $\gamma$ is a divider of the duration $T_{TS}$ of the time slot expressed in number of chips, $\tau$ and $\tau' = \dfrac{T_{TS}}{\gamma}$ are slightly different.

As a rule, if for the No. n RSI interval of the RSI string, $FN_n$, $SLN_n$ and $STN_n$ respectively designate the frame number of the starting time slot, the starting time slot number within the frame and the number of time steps between the beginning of the RSI interval and the beginning of the starting time slot of this RSI interval, then the No. n RSI interval starts at the instant $t_n$:

$$t_n = t_{F0} + FN_n \cdot T_F + SLN_n \cdot T_{TS} - STN_n \cdot \tau \tag{3}$$

If a number $s_n$ of an instant of occurrence is defined by the following formula:

$$s_n = 15 \cdot \gamma \cdot FN_n + \gamma \cdot SLN_n - STN_n \tag{4}$$

Then the next formula (5):

$$s_n = s_0 + n \cdot \frac{T}{\tau'} \tag{5}$$

connecting $s_n$ to $s_0$ is always verified, whether the granularity of the instant of occurrence is equal to a $\gamma$th time slot or not (in the latter case $STN_n$ is taken to be zero for any value of n). $\frac{T}{\tau'}$ is the integer expressing the period of occurrence in number of $\gamma^{ths}$ of a time slot. Thus, the value of $s_n$ being given by the formula (5), the values of $FN_n$, $SLN_n$ and $STN_n$ are deduced therefrom by the following formulae:

$$STN_n = \begin{cases} 0 & \text{if } s_n \bmod \gamma = 0 \\ \gamma - (s_n \bmod \gamma) & \text{else} \end{cases} \tag{6}$$

$$SLN_n = \frac{s_n + STN_n}{\gamma} \bmod 15 \tag{7}$$

$$FN_n = \frac{s_n + STN_n - \gamma \cdot SLN_n}{15 \cdot \gamma} \tag{8}$$

The values of $FN_n$, $SLN_n$ and $STN_n$ having thus been computed, the instant of occurrence $t_n$ is deduced therefrom by the formula (3). It must be noted that, for preferred values of $\tau$ which give a regular spacing of the additional synchronization bursts, the instant of occurrence $t_n$ is substantially periodic. Indeed, it diverges from a periodic instant $t_0 + n.T$ only for a maximum of $\gamma$ chips because $\tau$ and $\tau'$ do not differ by more than one chip.

The mobile stations are informed of the changes in value of the parameters $FN_0$, $SLN_0$, $STN_0$, $\tau$, T and IN by a common signalling channel or individually by a dedicated signalling channel. The parameter $\tau$ may be a constant of the network and, in this case, it is unnecessary to send it to the mobile stations. The parameters $FN_0$, $SLN_0$ and $STN_0$ may be replaced in an equivalent way by $s_0$ given by the formula (4) for n = 0.

For a given string RSI, the position of the RSI intervals of this string in the radio frames is constant when the period of occurrence T is a multiple of the duration of the radio frame, namely when $T/T_F$ is an integer. Advantageously, this situation will be avoided. Indeed, the generation of the compressed mode may be complex and may necessitate specific computations depending on the position of the transmission gap in the radio frame. It is therefore advantageous, for measurements on UMTS-FDD cells by a UMTS-FDD cell, that the transmission gap should have a fixed position in the radio frame, and that it should be the RSI interval that has a variable position. Thus, by making sure that the position of the RSI intervals is not constant in the radio frames, it is ensured that the RSI interval and the transmission gap will coincide at a given time if the position of the transmission gap is fixed.

Hereinafter, $\gamma$ will designate the function of $\tau$ giving the number of synchronization bursts per time slot for time slots entirely included in the RSI interval. More generally, $\gamma$ depends both on $\tau$ and the time slot number considered (the number 0 designating the starting time slot of the RSI interval). Indeed, if t is the starting instant of the starting time slot of the RSI interval then, for the time slot numbered n, the first additional synchronization burst will begin at the instant $t+k.\tau$, where k is the smallest integer such that $t+k.\tau \geq t+n.2560+256$. In other words,

$$k = \left\lceil \frac{n \cdot 2560 + 256}{\tau} \right\rceil ,$$

where $\lceil x \rceil$, designates the smallest integer greater than or equal to x. The last additional synchronization burst of the time slot numbered n begins at the instant $t+k'.\tau$, where k' is the smallest integer such that $t+k'.\tau+256 \geq t+(n+1).2560$. In other words,

$$k' = \left\lfloor \frac{(n+1) \cdot 2560 - 256}{\tau} \right\rfloor .$$

The result therefore is:

$$\gamma(n,\tau) = \left\lfloor \frac{(n+1)\cdot 2560 - 256}{\tau} \right\rfloor - \left\lceil \frac{n\cdot 2560 + 256}{\tau} \right\rceil + 2$$

However, for preferred values of $\tau$ giving a regular spacing of the additional synchronization bursts within the time slots, $\gamma(n,\tau)$ does not depend on n when n is sufficiently small, more precisely when $n\leq 7$. The table below gives a few preferred values of $\tau$ providing for a substantially regular spacing of synchronization bursts during the RSI interval, as well as corresponding values of $\gamma(n,\tau)$ for any n in an interval $\{0,1,2,...,n_c\}$. The value of $n_c$ is indicated in the last line of the table.

| $\tau$ | 256 | 284 | 319 | 320 | 321 | 365 | 426 | 511 | 512 |
|---|---|---|---|---|---|---|---|---|---|
| $\gamma$ | 10 | 9 | 8 | 8 | 8 | 7 | 6 | 5 | 5 |
| $n_c$ | $+\infty$ | 7 | 7 | $+\infty$ | 7 | 14 | 14 | 14 | $+\infty$ |

This table shows that the value of $n_c$ is always greater than or equal to 7. Thus, the duration D of the RSI interval can consist of up to eight time slots with a constant number of synchronization bursts per time slot. It is therefore considered here below that, for a given value of $\tau$, $\gamma$ is a constant number. The preferred values of $\tau$ provide for a regular spacing of the additional synchronization bursts because, for these values, $\tau$ and $\tau' = \frac{TS}{\gamma}$ have neighbouring values.

Like the basic synchronization bursts, each additional synchronization burst bears a synchronization symbol in $\{1, 2, ..., 16\}$. Similarly, each additional synchronization burst is the addition of a primary synchronization burst generated by means of a primary synchronization code Cp', called an additional primary code, and a secondary synchronization code which is a product of a parent secondary code Cm', called an additional parent secondary code, and a Walsh code $W_1, W_2, ..., W16$ determined by the synchronization symbol. The additional synchronization bursts may be taken to be identical or different from the basic synchronization bursts.

In a first case, the primary code Cp' of the additional synchronization bursts is identical to the primary code Cp of the basic synchronization bursts. Similarly, the parent secondary code Cm' of the additional synchronization bursts is identical to the parent, secondary code Cm of the basic synchronization bursts. In this case, the additional synchronization bursts are therefore taken to be identical to basic synchronization bursts. This case has the advantage of enabling the use of one and the same type of equipment to detect the basic synchronization signal and the additional synchronization signal. However, if $\tau = 256$, $\tau = 320$ and $\tau = 512$, there may be a problem of descending compatibility, namely a risk that a mobile station not implementing the invention may be disturbed by the additional synchronization signals when it performs the first elementary synchronization step. Indeed, in these cases ($\tau = 256$ or 320 or 512), the duration of the time slot is a multiple of $\tau$. During the first elementary synchronization step, a circular accumulation is then done with a period equal to the duration of a time slot. In the invention, this accumulation then generates not only correlation peaks due to the basic synchronization bursts but also correlation peaks due to the additional synchronization bursts. Thus, there is a risk that a mobile station not implementing the invention may assume that a significant correlation peak due to the additional synchronization bursts is a correlation peak due to the basic synchronization bursts, and there is a risk that this mobile station will take these additional correlation peaks to be starts of time slots. This risk is relatively high when the mobile station not implementing the invention accumulates the correlations of the basic synchronization signal on a small number of time slots. This risk is also higher when the RSI interval is long.

In the invention, this problem is resolved in many ways. A first method avoids the use of the values $\tau = 256$ or 320 or 512 when the duration D of the RSI interval is greater than a time slot. Indeed, when D is equal to a time slot, there is no accumulation of additional synchronization bursts since they are present only in a time slot. When D is higher than a time slot, advantageously the other preferred values of $\tau$, namely 284, 319, 321, 365, 426 or 511 chips, are used. With these values of $\tau$, when the correlation values are accumulated with a period whose duration is equal to a time slot, the correlation values due to the additional synchronization bursts having the same order number within the different time slots do not coincide circularly and therefore do not accumulate. There are therefore no correlation peaks of a significant value generated by the additional synchronization bursts.

A second method to prevent this problem of descending compatibility consists in generating additional synchronization bursts that are different from the basic synchronization bursts. In this case, the method takes, for example, primary codes Cp and Cp' that are different and, if need be, secondary parent codes Cm and Cm' that are also different. The codes Cp' and Cm' are chosen so as to present efficient properties of self-correlation and inter-correlation. Furthermore, Cp' is constructed in the same way as Cp to enable a hierarchical correlation or a correlation with a Golay correlator so as to reduce the complexity of the matched correlation filter. The mobile station can then distinguish between the correlation peaks due to the basic synchronization bursts and those due to the additional synchronization bursts.

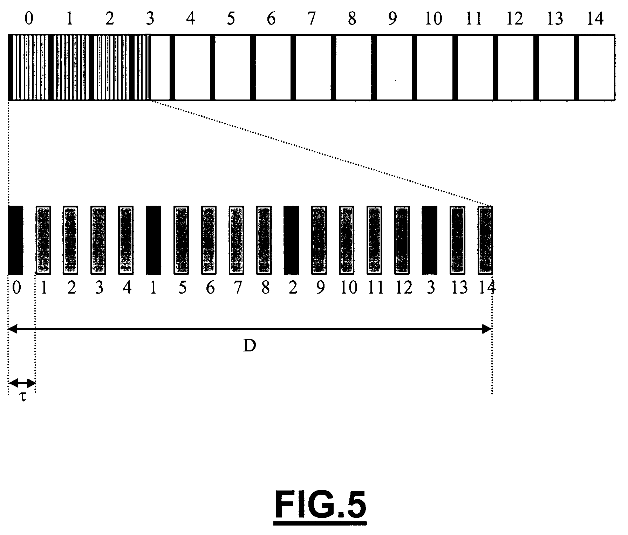

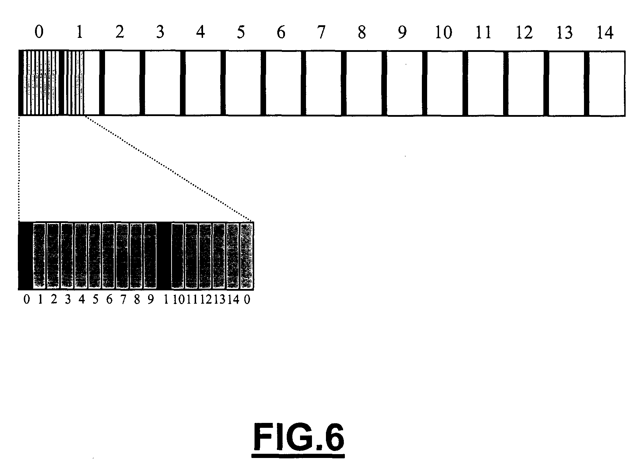

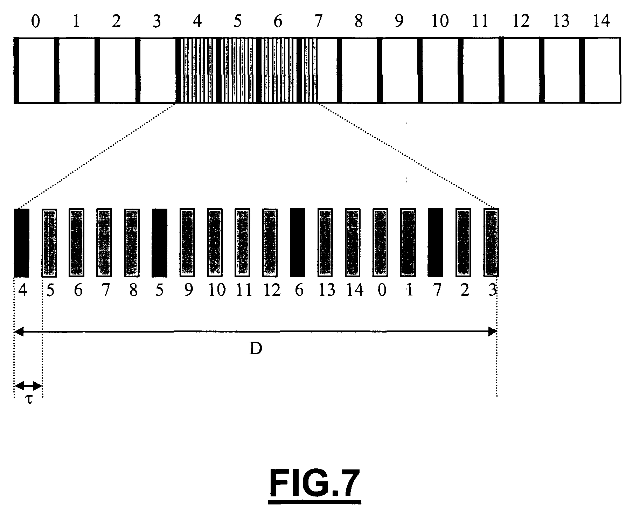

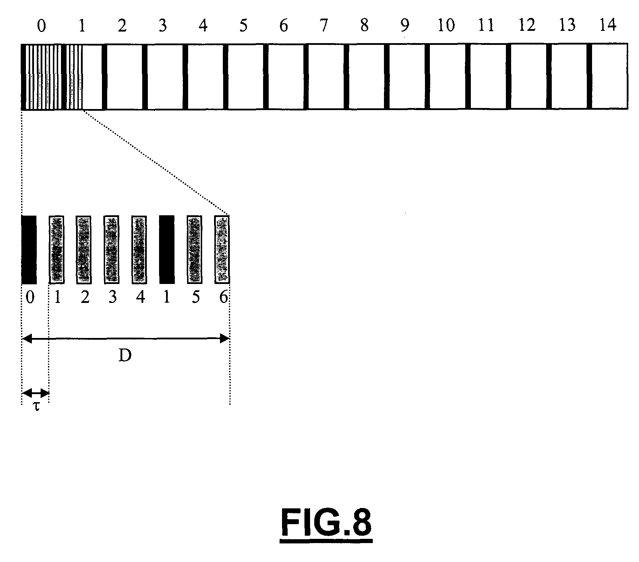

A second embodiment of the method of the invention is illustrated in Figures 5, 6, 7 and 8. In this embodiment, the RSI interval contains redundant synchronization bursts. In Figure 5, the RSI interval extends over more than three time slots. It encloses c = 18 synchronization bursts including 14 additional synchronization bursts. Three additional synchronization bursts are redundant with respect to the basic synchronization bursts included in the concerned RSI interval, i.e. they reproduce the same synchronization symbol as a basic synchronization burst already present in the RSI interval. Figure 5 and Figure 6 respectively show an UMTS-FDD radio frame generated by the second embodiment of the method of the invention with $\tau$ being equal respectively to 512 chips and 256 chips. In this embodiment, it is also possible to position the RSI interval differently in the radio frame as illustrated in Figure 7. In this example, the RSI interval begins at the beginning of the fifth time slot (numbered 4). Finally, Figure 8 illustrates the case where the RSI interval in the second embodiment of the inventive method is restricted to D = 1.5 time slots.

On a more mathematical plane, it is also possible to define applications to implement the step of generating basic and additional synchronization bursts. What has to be done is to determine applications to define the synchronization symbols to be transmitted in the synchronization channel during a radio frame. Indeed, for each synchronization burst, with the value of the primary synchronization code (Cp or Cp') and the value of the parent secondary code (Cm or Cm') being predetermined, the synchronization burst is entirely determined when the associated synchronization symbol is known. The reference $\sigma$ is given to the finite sequence of the 15 consecutive synchronization symbols proper to a cell of the network, each of these symbols being sent at the beginning of one of the 15 time slots of the radio frame in the form of a secondary basic synchronization burst. This sequence $\sigma$, called a basic sequence, may be considered to be an application of the set {0, 1,...,14}, of the time slot numbers in the radio frame to the set {1, 2, ..., 16} of the synchronization symbols. This application associates a synchronization symbol $\sigma(i)$, corresponding to the secondary code transmitted at the beginning of this time slot, with any time slot i. To simplify the notations, $\sigma(i)$ is used, for any relative integer i, to denote the value of $\sigma(i \bmod 15)$ where "a mod b" is the remainder of the Euclidean division of "a" by "b". We therefore have $\sigma(15) = \sigma(0)$, $\sigma(16) = \sigma(1)$, etc.

The sequence of synchronization symbols to be transmitted by the additional synchronization signal is a function of the sequence $\sigma$. In order to define the synchronization symbols to be transmitted in a radio frame comprising an RSI interval, a sequence $\xi(0), \xi(1), ..., \xi(15.\gamma-1)$ of $15.\gamma$ synchronization symbols is defined. This sequence is called a additional sequence and is defined as a function of the sequence $\sigma$ such that the $\gamma$ symbols $\xi(i\cdot\gamma), \xi(i\cdot\gamma+1), ..., \xi((i+1)\cdot\gamma-1)$ are associated with the time slot i. It may be recalled that $\gamma$ designates the number of synchronization bursts per time slot entirely included in the RSI interval. Thus, $\xi$ is an application of {0, 1, ..., 15.$\gamma$-1} to {1, 2, ..., 16}. With a view to simplifying the notations, $\xi(x \bmod (15.\gamma)) = \xi(x)$ is also noted for every integer x. Then, for an RSI interval that contains c synchronization bursts and starts v (=STN) time steps before its starting time slot numbered u (=SLN), the synchronization bursts transmitted during the RSI interval respectively bears the synchronization symbols $\xi(u\cdot\gamma-v), \xi(u\cdot\gamma-v+1), ..., \xi(u\cdot\gamma-v+c-1)$. In other words, the synchronization symbols transmitted during the RSI interval are taken by circularly travelling through the sequence $\xi$ starting from the first synchronization symbol $\xi(u.\gamma-v)$ associated with the starting instant of the RSI interval. By definition, we have $\xi(i.\gamma) = \sigma(i)$. Indeed, the synchronization burst at the beginning of the time slot is always a basic synchronization burst. The sequence $\xi$ may be defined in many ways as a function of the sequence $\sigma$. Hereinafter, several possible formulations of $\xi$ have been proposed that make it possible especially to implement the first and second embodiments explained here above as well as other embodiments. In all the formulations, i designates a time slot number, j designates a synchronization burst number within the time slot numbered i (the synchronization burst is a basic synchronization burst when j = 0, and, otherwise, it is an additional synchronization burst), u designates the number of the starting time slot of the RSI interval (u is referenced SLN in the formulae (3) and (4)) and d designates the number of basic synchronization bursts included in the RSI interval.

In Figures 1 to 11 the synchronization bursts corresponding to the synchronization symbols $\sigma(i)$ are identified by their time slot numbers i so as not to burden the figures.

To obtain the first embodiment (Figures 1 to 4), $\xi$ has been defined as follows:

$$\forall i \in \{0,1,\ldots,14\} \forall j \in \{0,1,\ldots,\gamma-1\} \begin{cases} \xi(i \cdot \gamma + j) = \sigma(u + d + (i-u) \cdot (\gamma-1) + j - 1) & \text{if } j \neq 0 \\ \xi(i \cdot \gamma + j) = \sigma(i) & \text{else} \end{cases}$$

The equation $\xi(i\cdot\gamma+j)=\sigma(u+d+(i-u)\cdot(\gamma-1)+j-1)$ corresponds to a first assigning step for assigning an element $\sigma(u+d+(i-u).(\gamma-1)+j-1)$ of the basic sequence to each element $\xi(i.\gamma+j)$ of the additional sequence that does not correspond to a basic synchronization burst (namely for j≠0). The succession of elements of the basic sequence is thus reproduced iteratively in the additional sequence restricted to the elements not associated with a basic synchronization burst by circularly taking up the elements of said basic sequence, starting from the element $\sigma(u+d)$ of the basic sequence associated with the first time slot, numbered u+d mod 15, following the RSI interval, and in circularly going through the additional sequence starting from the first element ξ(u.γ+1) (i=u and j=1) that is associated with the starting time slot (i=u) and is not associated with a basic synchronization burst (j≠0). The second equation ξ(i.γ) = σ(i) (for j = 0) corresponds to a second assigning step for the assigning, to each element ξ(i.γ) of the additional sequence that corresponds to a basic synchronization burst (j=0), of the value of the element σ(i) of the basic sequence corresponding to this basic synchronization burst.

To obtain the second embodiment (Figures 5 to 8), ξ is defined as follows:

$$\forall i \in \{0,1,\ldots,14\} \forall j \in \{0,1,\ldots,\gamma-1\} \begin{cases} \xi(i \cdot \gamma + j) = \sigma(u+1+(i-u)\cdot(\gamma-1)+j-1) & \text{if } j \neq 0 \\ \xi(i \cdot \gamma + j) = \sigma(i) & \text{else} \end{cases}$$

The equation ξ(i·γ+j)=σ(u+1+(i-u)·(γ-1)+j-1) corresponds to a first assigning step designed for the assigning of an element σ(u+1+(i-u)·(γ-1)+j-1) of the basic sequence to each element ξ(i.γ+j) of the additional sequence that does not correspond to a basic synchronization burst (j≠0). The additional sequence is then generated in the same way as for the first embodiment but starting from the element σ(u+1) of the basic sequence associated with the time slot, numbered u+1 mod 15, following the starting time slot. The second equation ξ(i.γ) = σ(i) (namely j = 0), corresponds to the second assignment step of the first embodiment.

A third embodiment is shown in Figure 9. In this embodiment, ξ is defined as follows:

$$\forall i \in \{0,1,\ldots,14\} \forall j \in \{0,1,\ldots,\gamma-1\} \begin{cases} \xi(i \cdot \gamma + j) = \sigma(i \cdot \gamma + j) & \text{if } j \neq 0 \\ \xi(i \cdot \gamma + j) = \sigma(i) & \text{else} \end{cases}$$

The equation ξ(i·γ+j)=σ(i·γ+j) corresponds to a first assignment step for assigning an element σ(i·γ+j) of the basic sequence to each element ξ(i.γ+j) of the additional sequence. The additional sequence is then generated by circularly taking up the elements of the basic sequence and by starting from the element σ(0) associated with the first time slot of the radio frame. At the end of this first assigning step, the values assigned to the elements ξ(i.γ) (j = 0) corresponding to basic synchronization bursts are not final values and are reassigned during a reassigning step. Indeed, the equation ξ(i·γ+j)=σ(i·γ+j) is considered only for the case j ≠ 0. The second equation ξ(i.γ) = σ(i) (namely j = 0), corresponds to said reassigning step. The result of this step is identical to that of the second assigning step of the first and second embodiments. In Figure 9, τ is equal to 284 chips, namely γ = 9 synchronization bursts per time slot. Furthermore, the RSI interval starts at the beginning of the time slot i=14 and straddles two consecutive frames.

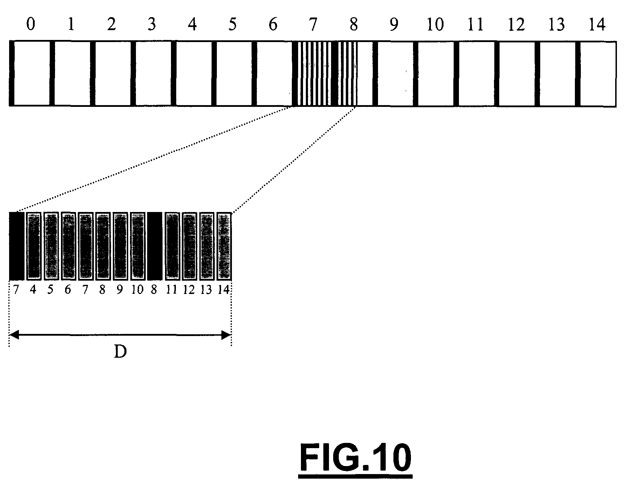

According to a fourth embodiment shown in Figure 10, ξ is defined as follows:

$$\forall i \in \{0,1,\ldots,14\} \forall j \in \{0,1,\ldots,\gamma-1\} \begin{cases} \xi(i \cdot \gamma + j) = \sigma(i \cdot (\gamma-1)+j-1) & \text{if } j \neq 0 \\ \xi(i \cdot \gamma + j) = \sigma(i) & \text{else} \end{cases}$$

The equation ξ(i·γ+j)=σ(i·(γ-1)+j-1) corresponds to a first assigning step to assign an element σ(i.(γ-1)+j-1) of the basic sequence to each element ξ(i.γ+j) of the additional sequence that does not correspond to a basic synchronization burst (namely for j≠0). The additional sequence restricted to the elements not associated with a basic synchronization burst is then generated by circularly taking up the elements of the basic sequence and starting from the element σ(0) associated with the first time slot of the radio frame. The second equation ξ(i.γ) = σ(i) (namely j = 0) corresponds to the second assigning step of the first and second embodiments. In Figure 10, τ is equal to 320 chips, namely γ = 8 synchronization bursts per time slot and the RSI interval begins at the beginning of the time slot i = 7.

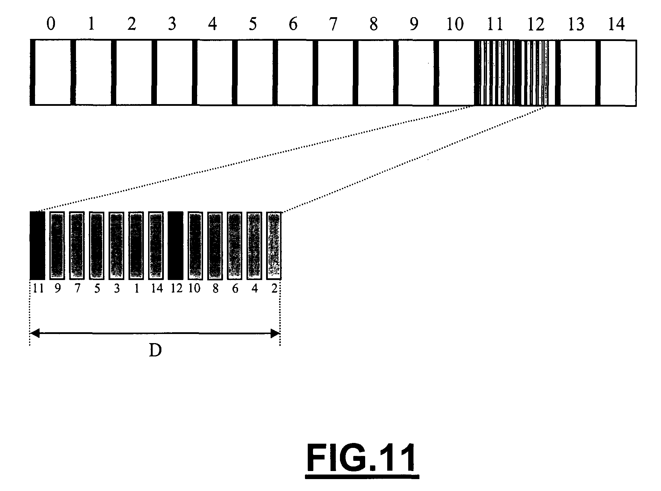

Finally, in a fifth and last embodiment shown in Figure 11, ξ is defined as follows:

$$\forall i \in \{0,1,\ldots,14\} \forall j \in \{0,1,\ldots,\gamma-1\} \xi\{i \cdot \gamma + j) = \sigma(i + j \cdot \delta)$$

where δ is a function of γ defined in the following table:

| γ | δ |
|---|---|
|   |   |

(continued)

| 5 | 6 |
|---|---|
| 6 | 3 |
| 7 | 13 |
| 8 | 2 |
| 9 | 2 |
| 10 | 11 |

For each time slot numbered i, the equation $\xi(i\cdot\gamma+j)=\sigma(i+j\cdot\delta)$ corresponds to an assigning step to assign an element $\sigma(i+j.\delta)$ of the basic sequence to each element $\xi(i.\gamma+j)$ of the additional sequence associated with the time slot considered (namely for j travelling through {0, 1, ..., $\gamma$-1}). In Figure 11, $\tau$ is equal to 365 chips, giving $\gamma$ = 7 synchronization bursts per time slot, and the RSI interval begins at the beginning of the time slot i = 11.

According to the invention, the secondary codes to be transmitted by the additional synchronization signal is therefore a function of the sequence $\sigma$. This has the following advantages:

- There is no need to inherently generate the sequences of secondary codes of the additional signal because the mobile station is capable of generating $\sigma$ (for example from a search table) and the sequence of the secondary codes of the additional signal is therefore deduced according to a preset rule.
- The sequences $\sigma$ having been optimized for their good properties of periodic self-correlation and intercorrelation, the sequences of secondary codes produced inherit the same properties.

According to the invention, the elementary synchronization steps become the following:

- In a first elementary step, the mobile station filters the primary synchronization code Cp' by means of a digital correlation filter adapted to Cp'; the correlation values are accumulated circularly with a period equal to $\tau$; at the end of this step, the mobile station has detected the time base of the network to the nearest multiple of $\tau$ (at the end of the first standard elementary synchronization step, the time base is detected to the nearest multiple of the duration of the time slot).
- In a second elementary step, the mobile station is based on the sequence of synchronization symbols received in the additional synchronization bursts and on certain basic synchronization bursts (at least the first one). The mobile station, for each group of codes, knows the sequence of synchronization symbols that it must receive during the RSI interval. Thus, at the end of the second elementary step, the base station has detected the starting instant of the RSI interval as well as the group of codes of the measured cell.
- In a third step, the mobile station detects the scrambling code of the cell on the basis of the information acquired during the two preceding elementary steps.

It must be noted that, in certain types of measurement, it is possible to eliminate the third step of synchronization and make the measurement only with the first two steps. To carry out a measurement on a cell, it is necessary to be able to isolate the cell in question from the other cells using the same frequency. This isolation of the cell considered is possible through its scrambling code. Indeed, there are 512 different scrambling codes, and their allocation to the different cells of the network is planned so that the neighbouring cells do not use the same scrambling code. Thus, the number of the scrambling code locally identifies a cell. The third synchronization step then enables the measurement of a level of power for each scrambling code of the group of codes by using the CPICH. This third step is therefore used to measure the reception power of each cell respectively corresponding to the scrambling codes for a frame synchronization obtained during the second step and therefore to ascertain that the cell is received with sufficient power or that the frame synchronization is properly done. When the mobile station is not capable, for lack of memory, of taking the third step on the same samples as with the first two steps, the third step requires a greater window time.

To eliminate the third elementary step, it is possible to envisage a planned operation of the groups of codes by site, in which two neighbouring cells will not be able to use the same group of codes unless their base stations are located in the same place. Indeed, a cell does not always have the approximate shape of a disk. It may also have the approximate shape of an angular sector. In this case, several cells corresponding to different angular sectors of one and the same disk may have base stations placed in the centre of this disk. Thus, when the measurement consists in determining only the frame synchronization, it is enough to stop at the second elementary step. Indeed, two neighbouring cells that do not have the same frame synchronization are necessarily on distinct sites and therefore have distinct code groups, which enables them to be distinguished during the second synchronization step.

The application of the synchronization method in an UMTS-FDD network is described here below.

We shall consider the case of a mobile station synchronized with a first base station within the UMTS network seeking to get synchronized with a second base station of this network. Each base station of the network can selectively take a state corresponding to periods of transmission of useful signals, especially synchronization signals and data signals, to the mobile station and a state corresponding to periods corresponding to the previously defined transmission gaps during which the base station concerned stops sending the useful signals towards the mobile station. Then, according to the invention, if the carrier frequency of the useful signals sent by the second base station is different from that of the useful signals sent by the first base station, the position of the transmission gaps of the first base station in the radio frame is determined so that the synchronization bursts of said reinforced synchronization interval proper to the second base station are sent by this base station during the transmission gaps of the first base station.

This positioning of the transmission gaps is possible when the instants of occurrence of the RSI intervals of the second base station are known to the network in the time base of the first base station. According to a first method, this is the case when the network approximately knows the time difference between the time bases of the two base stations. Indeed, since the network knows the instants of occurrence of the RSI intervals in the time base of the second base station as well as the time difference between the two time bases, it can deduce therefrom the instants of occurrence in the time base of the first base station. To know this time difference, the network can estimate it at the time of the handovers by comparing the measurements of synchronization made by the mobile station respectively for the two cells. This estimation is stored in a database of the network. The precision with which the time difference is estimated deteriorates in time with the drift of the time bases of each base station, but it is updated whenever a handover is made. A second and third method for knowing the instants of occurrence of the RSI intervals of the new base station expressed in the time base of the first base station shall be described further below.

Consequently, when a mobile station in radio link with a current cell has to get synchronized with a cell whose carrier frequency is different, the network makes the mobile station enter the compressed mode. Since the network knows the instants of occurrence of the RSI intervals of the neighbouring cell expressed in the time base of the current cell, it can then place the mobile station in compressed mode during the RSI interval of the neighbouring cell. For the synchronous networks, a mobile station could have the RSI interval of all the cells of the network in a single time window if these intervals are substantially simultaneous in all the cells. In the prior art, to receive 15 synchronization bursts, the time window is a 10 ms window. According to the invention, by using an RSI interval containing $c = 15$ synchronization bursts, the time needed for the time window corresponds to the sum of:

- the duration of the RSI interval,
- twice the stabilization time of the local oscillator (namely $2.Ts$), and
- twice the time approximation for the position of the RSI interval.

The duration of the time window can thus be reduced accordingly. If, however, the mobile station nevertheless opens a 10 ms window containing the RSI interval, it will have 28 synchronization bursts available in the case of Figure 3 and 29 synchronization bursts available in the embodiment of Figure 6 instead of 15 synchronization bursts as in the prior art.

The reinforced synchronization signal can also be used when preparing a handover on cells with a same carrier frequency as the current cell. The mobile station listens to the base stations of the neighbouring cells, along with its normal activity, in order to take measurements on the neighbouring cells. If for example, to get synchronized, it needs to receive 15 synchronization bursts, then by opening a 1 ms time window covering the reinforced synchronization interval (in the case of Figure 3), it can receive these $c = 15$ synchronization bursts whereas, in the prior art, a 10 ms time window is necessary. In practice, the mobile station does not know the exact time position of the RSI interval (otherwise, the mobile station would have been already synchronized) but an approximate position of it. The duration of the time window needed is therefore the sum of :

- the duration D of the RSI interval, assuming that it is sought to cover it entirely, and
- twice the time approximation on the time position of the RSI interval, this approximation being expressed as an upper limit of the absolute value of the time difference between the real value and the value about which information is given to the mobile station.

It can be noted, that in the present case, the stabilization time of the local oscillator does not have to be taken into account since there is no change in frequency to be made.

Finally, we may take the case of a mobile station that seeks to make power measurements on neighbouring cells. In a mode called a reselection mode, the mobile station already has information on these neighbouring cells. In particular, it has approximate knowledge of the scrambling code and/or the time base. In practice, it can remove the need for the synchronization channel by making power measurements directly on the CPICH channel. However, since the knowledge of the time base is only approximate, the mobile station must then make measurements for all the possible time shifts of the time base. The number of operations this necessitates is especially great as the degree of approximation with which the time base is known is generally great. According to the invention, the synchronization channel is optimized to reduce the acquisition time of the synchronization information. It is then more valuable to search the time base of the cell in getting synchronized firstly on the synchronization channel. Once synchronized, the mobile station has only a power measurement to make.

The method of the invention can also be used in the context of a mobile station in connected mode or standby mode with a cell of the GSM network. This mobile station seeks to get synchronized with an UMTS-FDD cell to take a measurement of power of the signal sent by this cell. To do so, it uses the time windows provided by the GSM network (for example between transmission on the uplink and reception on the downlink or between reception on the downlink and transmission on the uplink or during the unoccupied frame of the multiframe) to acquire the synchronization bursts included in the RSI interval. Furthermore, the parameters of the RSI string are determined so as to limit the period at the end of which a reinforced synchronization interval coincides with a time window of the GSM network. To do so, it is enough that, when the instants of occurrence of the RSI intervals are periodic, the period of occurrence of the RSI intervals should not be a multiple of the TDMA frame duration. The time position of the RSI intervals with respect to the beginning of the TDMA frame then gets shifted at each new occurrence and the RSI interval ultimately coincides with a natural time window of the GSM system.

Finally, the method of synchronization of the invention can also be used to determine the position of a mobile station. In this application, the synchronization bursts of the RSI interval of a base station are used as a localization signal. It may be recalled that the position of a mobile station is determined with respect to the known positions of fixed base stations or known paths (base stations can be placed on board vehicles such as trains and, in this case, they may be used for positioning only if the network at all times knows their position). This determining is done by computing the differences in distance between the mobile station and each of the base stations of a pair of base stations included among at least three base stations of the network. These differences in distance are assessed by measuring the time difference between the instants of reception tR and $t'_R$ of localization signals sent by said pair of base stations, the time difference between the instants $t_E$ and $t'_E$ of transmission of these signals being known to the network. Here below, the term "dominant base station" designates the base station sending the localization signal that is received with the highest signal-to-noise ratio. In general, the dominant base station is the current base station. In this application, we consider an UMTS-FDD network with base stations sending synchronization bursts during an RSI interval. The group of the synchronization bursts of the RSI interval is hereinafter called a reinforced synchronization signal.

In a first case, it is assumed that the RSI intervals of the different base stations do not overlap and that the period T of occurrence of the RSI interval is the same for all the base stations. Furthermore, when the reinforced synchronization signal is sent by a base station, the base stations of the adjacent cells interrupt their transmission so that the reception of the reinforced synchronization signal is not disturbed. The time interval during which the transmission is interrupted is hereinafter called "period of silence" and is referenced S in the figures. The formation of periods of silence is not necessary in the case of the preparation of a handover. Indeed, if the mobile station cannot receive the synchronization channel of a neighbouring cell because the reception is excessively disturbed by the dominant base station (corresponding to the cell in which the mobile station is located), it means that a handover is not necessary since the signals of the current cell are received more clearly than those of the neighbouring cell considered.

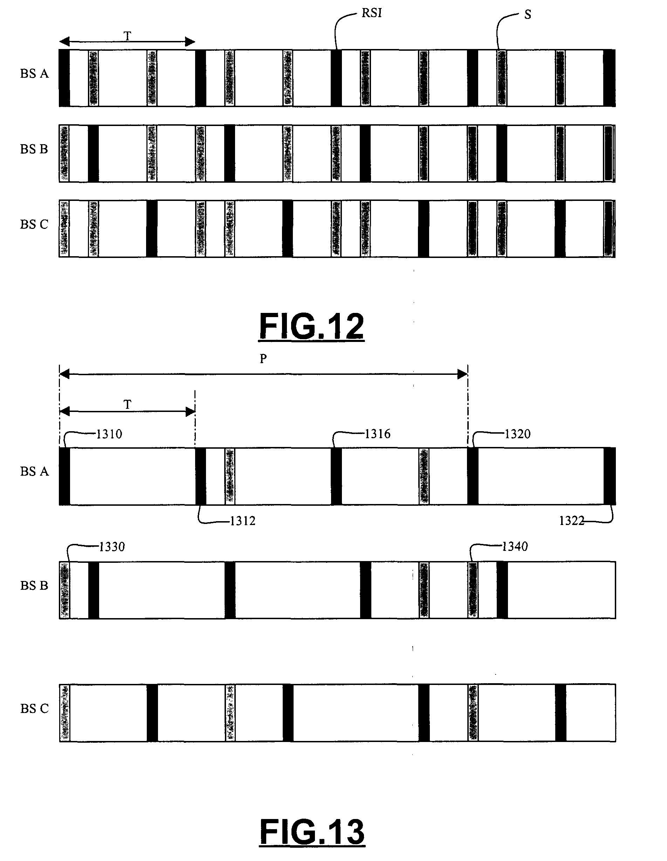

Figure 12 illustrates this first case with a network comprising three base stations of mutually neighbouring cells BS A, BS B and BS C. When the base station BS A sends its reinforced synchronization signal, the transmission operations of the base stations BS B and BS C are interrupted and the mobile stations for which these base stations are dominant then listen to the reinforced synchronization signal sent by the base station BS A. Similarly, when the base station BS B sends a reinforced synchronization signal, the base stations BS A and BS C are interrupted. When a reinforced synchronization signal is received by a mobile station, this mobile station determines the instant of arrival of the reinforced synchronization signal. This instant of arrival corresponds to the instant at which the first burst of the synchronization signal is received. If the mobile station manages to entirely pick up the reinforced synchronization signal, it is then capable of determining the instant of arrival of the synchronization signal with very great precision. If the reinforced synchronization signal is not entirely received, for example if only ten synchronization bursts are received out of a set of c = 15 synchronization bursts for the RSI interval, it is nevertheless possible to determine the instant of arrival. For example, if the first bursts of the reinforced synchronization signal are not received, the mobile station is then capable of computing the instant of arrival from the ten synchronization bursts received, given that the synchronization bursts are sent by each base station in an order proper to this base station. Otherwise, if the mobile station deems has not received a sufficient number of synchronization bursts, it can always use the information of the CPICH channel. Since the synchronization signal sent during a single reinforced synchronization interval may be enough to determine the instant of reception of the synchronization signal by a mobile station with respect to a base station, the speed of localization of a mobile station may be very fast since it is smaller than the period of occurrence T of the reinforced synchronization intervals which, for example, may be about 100 ms. This value is far below the values announced for other techniques of positioning mobile stations such as IPDL (Idle Period Downlink) and TA-IPDL (time aligned-idle period downlink).

In order to reduce the periods of silence on the radio links, a network can also decide to interrupt the base stations not during all the reinforced synchronization intervals but in one defined period P, for example once in every three reinforced synchronization intervals as shown in Figure 13. In this figure, for each base station, only one RSI interval in three coincides with a period of silence of the other base stations. For example, the RSI intervals referenced 1310 and 1320 of base station BS A coincide with periods of silence referenced 1330 and 1340 for the base station BS B and 1350 and 1360 for the base station BS C. On the other hand, the RSI intervals referenced 1312, 1316 and 1322 pertaining to the base station BSA do not coincide with periods of silence of the other base stations. Of course, the localization is then slower than previously but, since there are fewer periods of silence, there is a smaller loss of capacity of the radio link resulting from the periods of silence. In this example, the time of localization is then smaller than or equal to 300 ms.

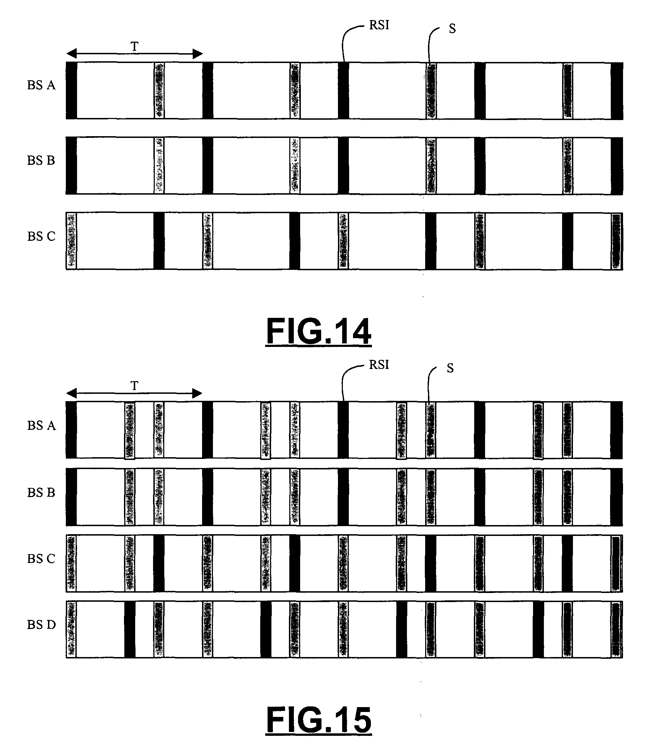

In Figures 12 to 14, only three base stations are considered. As a rule, for each cell, the set comprising the base station of the cell considered and the base stations of the nearby cells are considered. These sets generally comprise more than three elements. For example, in Figure 15, it is assumed that the cell of the base station BS A has three neighbouring cells respectively having BS B, BS C and BS D as their base stations. Thus, although the base station BS B has RSI intervals that overlap those of base station BS A in time, the mobile stations for which the base station BS A is dominant have a sufficient number of base stations available on which to make measurements. These are the base stations BS A, BS C and BS D.

Furthermore, we may consider the case where the RSI intervals of several base stations overlap, or are even superimposed. The Figure 14 shows the case of two base stations BS A and BS B for which the RSI intervals are superimposed. It is said that there is a conflict between the base stations BS A and BS B. In this case, the network can manage this situation in several ways.

If each mobile station can detect at least two base stations whose reinforced synchronization intervals do not coincide with that of its dominant base station, then it can determine its position. This situation is illustrated in Figure 15. The network can decide then to do nothing since all the mobile stations can be located. If, on the other hand, as illustrated in Figure 14, the mobile stations do not have at least two conflict-free base stations to locate themselves, or if it is desired that the mobile stations should have more than two conflict-free base stations to locate themselves, then it must be ascertained that the RSI intervals of two mobile stations are not systematically overlapping. To do this, one of the following methods must be applied.

A first method consists in taking instants of occurrence of the RSI intervals that are pseudo-random. Thus, instead of determining the instant of occurrence of the RSI interval numbered n according to the equation (2) $\forall n \; t_n = t_0 + n \cdot T$, it is determined by the following equation:

$$\forall n \; t_n = t_0 + n \cdot T + \Delta T_n \tag{9}$$

where, the granularity of the instant of occurrence being equal to a time slot, $\Delta T_n$ is a sequence of pseudo-random time gaps corresponding to integers $\Delta T_n/T_{TS}$ of time slots, these numbers $\Delta T_n/T_{TS}$ being pseudo-random with equiprobable values in $\{0, 1, ..., (\Delta T_{max}/T_{TS})-1\}$ and where $\Delta T_{max}$ is a maximum spacing, such that $\Delta T_n/T_{TS}$ is an integer, smaller than or equal to $T/T_{TS}$ and greater than 1. Thus the instant of occurrence $T_n$ corresponding to the beginning of the RSI interval is fixed with respect to an instant $t_0 + n \cdot T$ of periodic reference according to the period of occurrence T, said instant of occurrence $T_n$ being shifted by a time gap $\Delta T_n$ varying pseudo-randomly at each period of occurrence with respect to said reference instant. For example, $\Delta T_n/T_{TS}$ is generated according to a law common to all base stations and known to the mobile stations, its initialization parameters being transmitted with the parameters of the RSI string. Such laws are described for example in William H. Press and al. "Numerical Recipes in C", second edition, ISBN 0-521-43108-5, section 7.1. Let it be assumed for example that T = = $147 \cdot T_{TS}$ (147 time slots) and that $\Delta T_{max} = 20 \cdot T_{TS}$ (20 time slots) and that D = $T_{TS}$ (1 time slot). In the worst case where $t_0$ has the same value for two base stations of neighbouring cells, there is only one chance in $\Delta T_{max}/T_{TS} = 20$ that the RSI intervals will overlap. If, now, the gap E (assumed to be a whole number of time slots) between the two base stations is less than $\Delta_{max}$ the probability is even lower, for it is equal to no more than $E \cdot T_{TS}/(\Delta T_{max}^2)$. Finally, when the gap E, modulo T, is greater than $\Delta T_{max}$, then the probability of overlapping is zero.

It will be noted that it is not necessary for the pseudo-random law giving $\Delta T_n/T_{TS}$ to be very complicated. It is enough for it to be random enough for the problem which concerns us. For example, if $(\Delta T_n/T_{TS}) = b \cdot n \mod (\Delta T_{max}/T_{TS})$ and if b is an integer in $\{0, 1, ..., (\Delta T_{max}/T_{TS})-1\}$ such that two adjacent cells do not have the same value of b, then the same results are obtained in terms of probability, provided that $(\Delta T_{max}/T_{TS})$ is a prime number. The advantage of using a pseudo-random law is that the mean period of occurrence of the RSI intervals, which is equal to the period of occurrence T, can be the same for all the base stations. Another advantage relates to the fact that the network periodically broadcasts certain items of system information that the mobile stations need in order to know the configuration of the cell. If the system information broadcasting period is the same as the period of occurrence of the RSI interval then, when there are no pseudo-random instants of occurrence, it will always be the same system information whose reception is disturbed by the presence of the additional synchronization signal. Thus, when there are no pseudo-random instants of occurrence, the system information broadcasting periods and the periods of occurrence of RSI intervals cannot be selected independently. This makes the system more difficult to configure.

When the granularity of the instant of occurrence is equal to one $\gamma^{th}$ time slot, the method described above is generalized by replacing the equation (5) $s_n = s_0 + n \cdot \frac{T}{\tau'}$, giving the occurrence instant number of the RSI interval numbered n of the RSI string by the following equation:

$$s_n = \left( s_0 + n \cdot \frac{T}{\tau'} \right) + \Delta S_n \qquad (10)$$

The instant of occurrence is then computed by the successive use of the equations (6), (7), (8) and (3) after the computation of $s_n$ by the equation (10). $\Delta S_n$ is a sequence of pseudo-random numbers with equiprobable values in {0, 1, ..., $\Delta S_{max}$-1}, and $\Delta S_{max}$ is an integer number smaller than or equal to T/$\tau'$ and greater than or equal to 1.

Thus, the instant of occurrence $t_n$ corresponding to the beginning of the RSI interval is always fixed with respect to a periodic instant of reference $t_0 + n \cdot T$ according to the period of occurrence T, said instant $t_n$ of occurrence being shifted by a time gap $\Delta T_n = t_n -(t_0 + n \cdot T)$ varying pseudo-randomly at each period of occurrence with reference to said instant of reference.

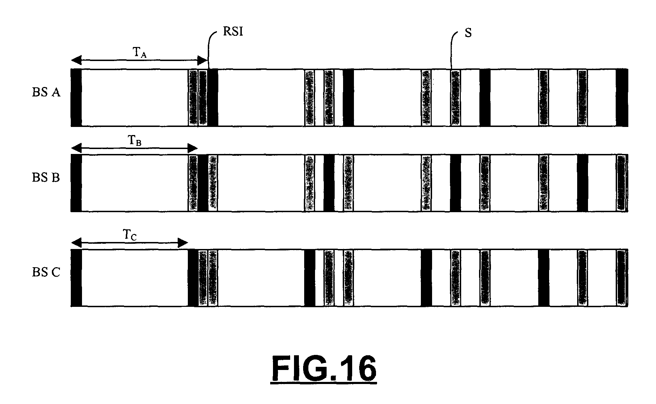

A second method to ensure that the RSI intervals of two base stations do not overlap systematically consists in defining different periods of occurrence for each base station. Thus, if it is ensured that two neighbouring cells A and B have periods of occurrence with respective RSI intervals $T_A$ and $T_B$, and that the gap between $T_A$ and $T_B$ is greater than D, then an overlapping of two RSI intervals will always be followed by a non-overlapping. This is illustrated in Figure 16.

In order that a first base station may set up periods of silence that are simultaneous with the RSI intervals of a second base station, it is necessary that the network should know the instants of occurrence of these RSI intervals in the time base of the first base station. A first method based on measurements of synchronization made at the time of the handovers has already been described. Here below, a second method is described. Like the first method, this second method does not require that the base stations should be synchronized with one another. The synchronization of a network is a complex task. Each base station produces an RSI string according to its own time base, which may drift with respect to those of the other base stations. Each base station is informed of the RSI string parameters of the base stations of the neighbouring cells by a base station controller. This controller is connected to the base stations by a typical wire link. If the base stations of two neighbouring cells are controlled by two different base station controllers, these controllers can send each other the RSI string parameters of the base stations that they control by a typical wire link. Each base station is provided with a radio receiver similar to that of a mobile station through which it can detect the instants of occurrence $T_n$ of the RSI intervals of the other base stations. The detection is made in the same synchronization steps as those done by the mobile station. When the first base station detects the instant of occurrence $T_n$ of the RSI interval of the second base station, it deduces the value of $t_0$ therefrom in one of the following equations depending on the embodiment:

- $\forall n \; t_n = t_0 + n \cdot T$, for a periodic instant of occurrence with a granularity equal to one time slot,
- $\forall n \; t_n = t_0 + n \cdot T + \Delta T_n$, for a pseudo-random instant of occurrence with a granularity equal to one time slot, or
- $\forall n \; t_n = t_0 +(FN_n - FN_0) \cdot T_F +(SLN_n -SLN_0) \cdot T_{TS} -(STN_n -STN_0) \cdot \tau'$ ($FN_n$, $SLN_n$ and $STN_n$ being deduced from $s_n$, itself deduced from the parameters of the RSI string), for an instant of occurrence with a granularity equal to one $\gamma^{th}$ of a time slot; $s_n$ is given by the equation (5) for a periodic instant of occurrence and by the equation (10) for a pseudo-random instant of occurrence.

Then, with $t_0$ being estimated, the first base station can then determine the instants of occurrence of all the RSI intervals of the second base station. The values of $t_0$ and $t_n$ are herein expressed in the time base of the first base station. The first base station can then foresee the instant of occurrence of each RSI interval of the second base station, and interrupt its transmission simultaneously if that is necessary. At each RSI interval of the second base station, the first base station makes a new measurement of the value of $t_0$ so as to compensate for the drift between the respective time bases of the two base stations considered. It should be noted that, in this method, it is possible to define a parameter

$T_p$ of configuration of the first base station which is the propagation time from the second to the first base station. This time is constant because the two base stations have fixed positions. Thus, to estimate $t_n$, the first base station deducts $T_p$ from the starting instant estimated at the reception of the RSI interval numbered n of the second base station. In a simplified alternative, the parameter $T_p$ is taken to be equal to zero.

It must be noted that the second method that has just been explained may be used in combination with the first method that has already been described. It must also be noted that the results given by this second method are all the more satisfactory as periods of silence are set up by the first base station simultaneously with RSI intervals of the second base station. Thus, the measurement of synchronization made by the first base station is not disturbed, during the periods of silence, by the signals that it sends.

A third method, similar to the second method, does not need the periods of silence. It is enough for the second base station to send a synchronization signal to the first base station on a physical channel other than the one used by the UMTS-FDD system, for example on a wire link. This physical channel must have a constant transmission time known to the first base station in the form of a parameter $T_p$. The synchronization signal is used by the first base station to measure the gap between its time base and that of the second base station.

Lastly, it should be noted that it may happen that, at certain occurrences, the RSI intervals of the base stations of the cells adjacent to the dominant cell considered are very close, without however coinciding. For example, they are placed in the same radio frame. Then, according to one improvement of the invention, the base station considered is equipped with decision-making means to determine the base stations of neighbouring cells for which it sets up a period of silence and/or for which it exceptionally omits to prepare such a period. This improvement gives a better trade-off between the positioning delay due to the omission of the period of silence and the disturbance generated by periods of silence that are too close to each other in time. Typically, the dominant base station takes the decision not to prepare a period of silence for all the neighbouring cells for each of the time intervals, known as decision intervals, of a sequence of periodic time intervals, for example for the sequence of the radio frames. This decision is made when the proportion of decision intervals intersecting one period of silence is higher than a threshold value of percentage, for example 20%.

When this decision is taken, from among the base stations of the neighbouring cells for which an RSI interval intersects the decision interval, the dominant base station selects those base stations for which a period of silence is omitted. For example, the selection is made by means of a counter for each of the base stations of neighbouring cells. Whenever the dominant base station decides to set up a period of silence for a base station of a neighbouring cell, it resets the associated counter and, whenever it omits to set up a period of silence, it increments the counter. When the dominant base station makes the decision not to set up a period of silence for all the base stations of the neighbouring cells with an RSI interval that intersects the current decision interval, it selects the base stations by starting with those whose counter value is the lowest and does so until the proportion of the decision interval covered by the periods of silence passes below the threshold value of percentage. When several base stations of neighbouring cells have the same counter value, a first method consists in selecting one of them randomly. A second method consists in trying out all the possible selections, in the rising order of associated counters, and bringing the proportion of the decision interval covered by the periods of silence of the non-selected base stations below the threshold value of percentage. This is done until perhaps one is found for which, for each base station selected, the next RSI interval intersects one (or two) decision intervals for which it is planned that no decision will be taken to omit a period of silence. If there is no possible selection in existence to verify this property, then the selection is made according to the first method.

Furthermore, in the event of conflict, i.e. when an RSI interval of a base station of a neighbouring cell, called a coincident station, coincides appreciably with an RSI interval of the dominant base station, the latter does not set up any period of silence for the coincident base station. When the improvement described here above is implemented, the counter associated with said coincident station is incremented. Moreover, the dominant base station, for each decision interval, applies the same method of decision and selection in limiting itself to the base stations of neighbouring cells that are not coincident for the decision interval considered.

In the above paragraphs, methods have been explained for minimizing situations of conflict, especially by having pseudo-random instants of occurrence or distinct periods of occurrence. Indeed, since the period of silence is not set up if there is conflict, the positioning of the mobile stations is disturbed for, when there is no period of silence, the interferences generated by all the signals sent by the base station of the dominant cell prevent the mobile station from properly receiving the localization signals of the base stations of the neighbouring cells. In one approach to mitigating this problem, in conflict situations, the base stations set up an approximate period of silence during which they do not interrupt the transmission of their reinforced synchronization signal. The presence of the reinforced synchronization signal alone only slightly interferes with the mobile station considered in relation to the base station of the dominant cell. This enables it to accurately detect the localization signals of the base stations of the neighbouring cells. Thus, even in conflict situations, all the mobile stations can receive the reinforced synchronization signals from the base stations of the neighbouring cells and locate themselves, since they are not interrupted, and since, nevertheless, there are periods of silence or, at worst, periods of approximate silence.

**Claims**

1. Method for the synchronization of at least one mobile station with a base station within a mobile telecommunication network, comprising a step for the generation, by said base station, of a basic synchronization signal comprising N synchronization bursts per radio frame, called basic synchronization bursts, a step for the transmission of said basic synchronization signal during at least one radio frame of a synchronization channel, each of said N basic synchronization bursts being associated with a time slot of said radio frame and being transmitted during a time interval at the beginning of said associated time slot, and a step for the reception and processing of said basic synchronization signal by said at least one mobile station,

   **characterised in that** it furthermore comprises a step for the generation of an additional synchronization signal intended to be transmitted with said basic synchronization signal during said step for the transmission of the basic synchronization signal, said additional synchronization signal comprising at least one synchronization burst, called additional synchronization burst, said at least one additional synchronization burst being transmitted during at least one time interval called reinforced synchronization interval (RSI), said at least one additional synchronization burst being furthermore non-overlapping with said basic synchronization bursts.

2. Method according to claim 1, **characterised in that** said at least one additional synchronization burst reproduces a basic synchronization burst.

3. Method according to claim 1 or claim 2, **characterised in that** said reinforced synchronization interval (RSI) comprises at least one basic synchronization burst.

4. Method according to any of claims 1 to 3, **characterized in that** said at least one reinforced synchronization interval (RSI) is transmitted periodically according to a period called occurrence period (T).

5. Method according to any of claims 1 to 3, **characterized in that** said at least one reinforced synchronization interval (RSI) is transmitted substantially periodically according to a period called occurrence period (T), the instant of occurrence of said at least one reinforced synchronization interval being shifted with respect to said period of occurrence by at most $\gamma$ chips, $\gamma$ being the number of synchronization bursts per time slot entirely included in said at least one reinforced synchronization interval.

6. Method according to any of claims 1 to 3, **characterized in that** the beginning of said at least one reinforced synchronization interval (RSI) is fixed with respect to a periodic instant of reference according to a period called period of occurrence, said beginning of said at least one reinforced synchronization interval (RSI) being shifted by a period of time varying pseudo-randomly at each period of occurrence with respect to said periodic instant of reference.

7. Method according to any of claims 1 to 6, **characterized in that** the position of the beginning of the reinforced synchronization interval (RSI) with respect to the beginning of the radio frame of the synchronization channel containing said reinforced synchronization interval is variable.

8. Method according to any of claims 4 to 7, **characterized in that** said period of occurrence is not a multiple of the duration of the radio frame.

9. Method according to any of claims 1 to 8, **characterized in that** the synchronization bursts are distributed in said reinforced synchronization interval (RSI) according to a time step ($\tau$).

10. Method according to claim 9, **characterized in that** said time step provides for a regular spacing of the additional synchronization bursts, said time step being substantially equal to the ratio of the duration of a time slot to a constant number $\gamma$.

11. Method according to claim 9 or claim 10, **characterized in that**, the first time slot the beginning of which follows or coincides with the beginning of said reinforced synchronization interval being designated by starting time slot, said additional synchronization bursts are distant by a relative integer number of time steps from the beginning of said starting time slot.

12. Method according to any of claims 9 to 11, **characterized in that** said time step ($\tau$) is equal to the duration of a synchronization burst so that the gap between the synchronization bursts of said reinforced synchronization interval (RSI) is zero.

**13.** Method according to any of the preceding claims, **characterized in that** the duration of the reinforced synchronization interval (RSI) is equal at most to 20% of that of the radio frame.

**14.** Method according to any of claims 1 to 13, **characterized in that** each of said basic synchronization bursts and said additional synchronization bursts carries a piece of information representing a symbol, called synchronization symbol, taken from a finite alphabet, and **in that** the sequence $(\sigma(0),..., \sigma(14))$ of the synchronization symbols corresponding to the basic synchronization bursts transmitted during a radio frame by a base station, called basic sequence, is proper to said base station.

**15.** Method according to claim 14, **characterized in that** the sequence of the synchronization symbols $(\xi(u\cdot\gamma-v),\xi(u\cdot\gamma-v+1),..., \xi(u\cdot\gamma-v+c-1))$ in said reinforced synchronization interval (RSI) is obtained according to a predefined method applied to said basic sequence $(\sigma(0),...,\sigma(14))$.

**16.** Method according to claim 15, itself dependent on claim 8, **characterized in that**, the first time slot the beginning of which follows or coincides with the beginning of said reinforced synchronization interval being designated by starting time slot, the instant of occurrence of the reinforced synchronization interval preceding the beginning of said starting time slot by a number v of time steps, said method comprises the following steps :

- a step for the generation of a sequence $(\xi(0), \xi(1),..., \xi(15\cdot\gamma-1))$ of synchronization symbols called additional sequence associating, with each time slot (i), a constant number $\gamma$ of synchronization symbols $(\xi(i\cdot\gamma), \xi(i\cdot\gamma+1),..., \xi((i+1)\cdot\gamma-1))$, synchronization symbols associated with two different time slots appearing in said additional sequence in the order of the time slots considered, and
- a step for assigning a synchronization symbol of said additional sequence to each synchronization burst in the reinforced synchronization interval (RSI), where said synchronization symbols are assigned to the consecutive synchronization bursts in following their order in said additional sequence and in starting with the synchronization symbol $(\xi(u\cdot\gamma-v))$ of said additional sequence being, within said additional sequence, v synchronization symbols before the first synchronization symbol $(\xi(u\cdot\gamma))$ associated with said starting time slot (u) of said reinforced synchronization interval.

**17.** Method according to claim 16, **characterized in that** said step for the generation of said additional sequence comprises the following steps:

- a first step for assigning an element $(\sigma(u+d+(i-u)\cdot(\gamma-1)+j-1))$ of the basic sequence to each element $(\xi(i\cdot\gamma+j))$ $(j\in\{1,2,...,\gamma-1\})$ of the additional sequence not associated with a basic synchronization burst, the succession of the elements of the basic sequence being reproduced iteratively in said additional sequence restricted to the elements not associated with a basic synchronization burst in circularly taking up the elements of said basic sequence starting from the element $(\sigma(u+d))$ of the basic sequence associated with the first time slot following the reinforced synchronization interval, and in circularly travelling through the additional sequence starting from the first element (i=u and j=1) associated with said starting time slot (i=u) and not associated with a basic synchronization burst $(j\neq0)$;
- a second step for assigning an element $(\sigma(i))$ of the basic sequence to each element $(\xi(i\cdot\gamma))$ of the additional sequence associated with a basic synchronization burst, where said elements of said basic sequence are assigned to the elements of said additional sequence associated with the basic synchronization bursts in following their order in said basic sequence.

**18.** Method according to claim 16, **characterized in that** said step for the generation of said additional sequence comprises the following steps:

- a first step for assigning an element $(\sigma(u+1+(i-u)\cdot(\gamma-1)+j-1))$ of the basic sequence to each element $(\xi(i\cdot\gamma+j))$ with $(j\in\{1,2,...,\gamma-1\})$ of the additional sequence not associated with a basic synchronization burst, the succession of the elements of the basic sequence being reproduced iteratively in said additional sequence restricted to the elements not associated with a basic synchronization burst, in circularly taking up the elements of said basic sequence starting from the element $(\sigma(u+1))$ of the basic sequence associated with the time slot following the first time slot of the reinforced synchronization interval, and in circularly travelling through the additional sequence starting from the first element $\xi(u\cdot\gamma+1)$ (i=u and j=1) associated with the starting time slot (i=u) and not associated with a basic synchronization burst $(j\neq0)$;

- a second step for assigning an element ($\sigma$(i)) of the basic sequence to each element ($\xi$(i·$\gamma$)) of the additional sequence associated with a basic synchronization burst, where said elements of said basic sequence are assigned to the elements of said additional sequence associated with the basic synchronization bursts in following their order in said basic sequence.

19. Method according to claim 16, **characterized in that** said step for the generation of said additional sequence comprises the following steps:

- a first step for assigning an element ($\sigma$(l+i·$\gamma$+j)) of the basic sequence to each element ($\xi$(i·$\gamma$+j) with (j$\in${1,2,..., $\gamma$-1})) of the additional sequence not associated with a basic synchronization burst, the succession of the elements of the basic sequence being reproduced iteratively in said additional sequence in circularly taking up the elements of said basic sequence and in starting from the first element($\sigma$(0)) of said basic sequence;
- a step for reassigning an element ($\sigma$(i)) of the basic sequence to each element ($\xi$(i·$\gamma$)) of the additional sequence associated with a basic synchronization burst, where said elements of said basic sequence are reassigned to the elements of said additional sequence associated with the basic synchronization bursts in following their order in said basic sequence, the reassigned element replacing, in said additional sequence, the element assigned during said assigning step.

20. Method according to claim 16, **characterized in that** said step for the generation of said additional sequence comprises the following steps:

- a first step for assigning an element ($\sigma$(i·($\gamma$-1)+j-1)) of the basic sequence to each element ($\xi$(i·$\gamma$+j) with (j$\in$ {1,2,..., $\gamma$-1})) of the additional sequence not associated with a basic synchronization burst, the succession of the elements of the basic sequence being reproduced iteratively in said additional sequence restricted to the elements not associated with a basic synchronization burst, in circularly taking up the elements of said basic sequence and in starting from the first element ($\sigma$(0)) of said basic sequence;
- a second step for assigning an element ($\sigma$(i)) of the basic sequence to each element ($\xi$(i·$\gamma$)) of the additional sequence associated with a basic synchronization burst, where said elements of said basic sequence are assigned to the elements of said additional sequence associated with the basic synchronization bursts in following their order in said basic sequence.

21. Method according to claim 16, **characterized in that** said step for the generation of said additional sequence comprises, for each time slot, a step for assigning an element ($\sigma$(i+j·$\delta$)) of the basic sequence to an element ($\xi$(i·$\gamma$+j) with j$\in${0,1,2,...,$\gamma$-1}) of the additional sequence associated with the time slot considered where said elements of said basic sequence are assigned to the elements of said additional sequence in starting from the element ($\sigma$(i)) corresponding to the basic synchronization burst of the time slot considered for said basic sequence and in incrementing the order of the element of the basic sequence to be assigned after each assignment, by a constant value $\delta$, the basic sequence being travelled through circularly.

22. Application of the method of synchronization according to one of claims 1 to 21 for the synchronization of a mobile station with a new base station within a UMTS type mobile telecommunication network, said mobile station being synchronized with a first base station of said UMTS type mobile telecommunication network, each of said base stations being able to selectively take a state corresponding to periods of transmission of useful signals, especially synchronization signals and data signals, to said mobile station and a state corresponding to periods called non-transmission intervals during which said base station stops transmitting the useful signals to said mobile station, **characterized in that**, if the carrier frequency of the useful signals transmitted by the new base station is different from that of the useful signals transmitted by the first base station, the position of the non-transmission intervals of the first base station in the radio frame is determined so that the synchronization bursts of said reinforced synchronization interval (RSI) proper to the new base station are transmitted by this base station during said non-transmission intervals.

23. Application of the synchronization method according to one of claims 1 to 21 for the synchronization of a mobile station with a new base station within a UMTS type mobile telecommunication network, said mobile station being synchronized with a first base station of a GSM type mobile telecommunication network, time windows being present in the multiframes of the GSM type mobile telecommunication network during which no useful signal for said mobile station is transmitted, **characterized in that** a set of reinforced synchronization intervals forming a string, called RSI string, the instants of occurrence of the reinforced synchronization intervals within said RSI string are determined so as to limit the period of time at the end of which a reinforced synchronization interval coincides with a time window of the GSM type mobile telecommunication network.

24. Application of the synchronization method according to one of claims 1 to 21 for the determining of the position of a mobile station in a UMTS type mobile telecommunication network comprising at least three base stations, said base stations being able to selectively take a state corresponding to periods of transmission of useful signals, especially synchronization signals and data signals, to a mobile station and a state corresponding to periods called periods of silence during which no useful signal is transmitted, **characterized in that** at least three base stations transmit synchronization bursts during respective reinforced synchronization intervals (RSI) that are not systematically overlapping,
**in that** the periods of silence of each of these base stations correspond to reinforced synchronization intervals (RSI) for at least one of the remaining base stations, and
**in that** said mobile station, through one of said at least three base stations, transmits information to a positioning unit of the mobile telecommunications network on the reception of the synchronization bursts of each of the reinforced synchronization intervals so that said positioning unit determines the position of said mobile station.

25. Application according to claim 24, **characterized in that**, during the periods of silence, no useful signal is transmitted apart from the synchronization bursts of the reinforced synchronization interval.

26. Mobile telecommunication network comprising at least one mobile station and a plurality of base stations, each base station comprising means for the generation of a basic synchronization signal comprising N synchronization bursts per radio frame, called basic synchronization bursts, means for the transmission of said basic synchronization signal during at least one radio frame of a synchronization channel, each of said N basic synchronization bursts being associated with a time slot of said radio frame and being transmitted during a time interval at the beginning of said associated time slot, each mobile station further comprising means for the reception and processing of said basic synchronization signal transmitted by one of said base stations to synchronize said mobile station with this base station,
**characterised in that** it furthermore comprises means for the generation of an additional synchronization signal intended to be transmitted with said basic synchronization signal by said means for the transmission of the basic synchronization signal, said additional synchronization signal comprising at least one synchronization burst, called additional synchronization burst, said at least one additional synchronization burst being transmitted during at least one time interval called reinforced synchronization interval (RSI), said at least one additional synchronization burst being furthermore non-overlapping with said basic synchronization bursts.

27. Network according to claim 26, **characterized in that** said at least one additional synchronization burst reproduces a basic synchronization burst.

28. Network according to one of claim 26 or claim 27, **characterized in that** said reinforced synchronization interval (RSI) comprises at least one basic synchronization burst.

29. Network according to one of claims 26 to 28, **characterized in that** said reinforced synchronization interval (RSI) is transmitted periodically in a period called period of occurrence.

30. Network according to any of claims 26 to 28, **characterized in that** the beginning of said at least one reinforced synchronization interval (RSI) is fixed with respect to a periodic instant of reference according to a period called period of occurrence, said beginning of said at least one reinforced synchronization interval (RSI) being shifted by a period of time varying pseudo-randomly at each period of occurrence with respect to said periodic instant of reference.

31. Network according to any of claims 26 to 30, **characterized in that** the position of the beginning of the reinforced synchronization interval (RSI) with respect to the beginning of the radio frame of the synchronization channel containing said reinforced synchronization interval is variable.

32. Network according to any of claims 29 to 31, **characterized in that** said period of occurrence is not a multiple of the duration of the radio frame.

33. Network according to any of claims 26 to 32, **characterized in that** the synchronization bursts are distributed uniformly in said reinforced synchronization interval (RSI) according to a time step ($\tau$).

**34.** Network according to claim 33, **characterized in that** said time step is equal to the duration of a synchronization burst so that the space between the synchronization bursts of said reinforced synchronization interval (RSI) is zero.

**35.** Network according to any of claims 26 to 34, **characterized in that** the duration of the reinforced synchronization interval (RSI) is equal at most to 20% of that of the radio frame.

**36.** Network according to any of claims 26 to 35, **characterized in that** each of said basic synchronization bursts and said additional synchronization bursts carries a piece of information representative of a symbol, called synchronization symbol, taken from a finite alphabet, and **in that** the sequence $(\sigma(0),..., \sigma(14))$ of the synchronization symbols corresponding to the basic synchronization bursts transmitted during a radio frame by a base station, called basic sequence, is proper to said base station.

**37.** Network according to claim 36, **characterized in that** the sequence of the synchronization symbols $(\xi(u \cdot \gamma - v), \xi(u \cdot \gamma - v+1),..., \xi(u \cdot \gamma - v+c-1))$ in said reinforced synchronization interval (RSI) is obtained according to a predefined method applied to said basic sequence $(\sigma(0),...,\sigma(14))$.

**38.** Network according to claim 37, itself dependent on claim 33, **characterized in that** the first time slot the beginning of which follows or coincides with the beginning of said reinforced synchronization interval being designated by starting time slot, the instant of occurrence of the reinforced synchronization interval preceding the beginning of said starting time slot by a number v of time steps,
the network comprises, to execute said method:

- means for the generation of a sequence $(\xi(0), \xi(1),..., \xi(15 \cdot \gamma - 1))$ of synchronization symbols, called additional sequence associating, with each time slot (i), a constant number $\gamma$ of synchronization symbols $(\xi(i \cdot \gamma), \xi(i \cdot \gamma + 1),..., \xi((i+1) \cdot \gamma - 1))$, synchronization symbols associated with two different time slots appearing in said additional sequence in the order of the time slots considered, and
- assignment means for assigning a synchronization symbol of said additional sequence to each synchronization burst in the reinforced synchronization interval (RSI), said synchronization symbols being assigned to the consecutive synchronization bursts in following their order in said additional sequence and in starting with the synchronization symbol $(\xi(u \cdot \gamma - v))$ of said additional sequence being, within said additional sequence, v synchronization symbols before the first synchronization symbol $(\xi(u \cdot \gamma))$ associated with said starting time slot (u) of said reinforced synchronization interval.

**39.** Network according to claim 38, **characterized in that** said means for the generation of said additional sequence comprise:

- first means for assigning an element $(\sigma(u+d+(i-u) \cdot (\gamma-1)+j-1))$ of the basic sequence to each element $(\xi(i \cdot \gamma + j))$ $(j \in \{1,2,..., \gamma - 1\})$ of the additional sequence not associated with a basic synchronization burst, the succession of the elements of the basic sequence being reproduced iteratively in said additional sequence restricted to the elements not associated with a basic synchronization burst in circularly taking up the elements of said basic sequence starting from the element $(\sigma(u+d))$ of the basic sequence associated with the first time slot following the reinforced synchronization interval, and in circularly travelling through the additional sequence starting from the first element (i=u and j=1) associated with said starting time slot (i=u) and not associated with a basic synchronization burst (j≠0); and
- second means for assigning an element $(\sigma(i))$ of the basic sequence to each element $(\xi(i \cdot \gamma))$ of the additional sequence associated with a basic synchronization burst, said elements of said basic sequence being assigned to the elements of said additional sequence associated with the basic synchronization bursts in following their order in said basic sequence.

**40.** Network according to claim 38, **characterized in that** said means for the generation of said additional sequence comprise:

- first means for assigning an element $(\sigma(u+1+(i-u) \cdot (\gamma-1)+j-1))$ of the basic sequence to each element $(\xi(i \cdot \gamma + j))$ with $(j \in \{1,2,...,\gamma - 1\})$ of the additional sequence not associated with a basic synchronization burst, the succession of the elements of the basic sequence being reproduced iteratively in said additional sequence restricted to the elements not associated with a basic synchronization burst, in circularly taking up the elements of said basic sequence starting from the element $(\sigma(u+1))$ of the basic sequence associated with the time slot following the first time slot of the reinforced synchronization interval, and in circularly travelling through the additional sequence starting from the first element ($\xi(u\cdot\gamma+1)$ (i=u and j=1)) associated with the starting time slot (i=u) and not associated with a basic synchronization burst (j≠0); and

- second means for assigning an element ($\sigma(i)$) of the basic sequence to each element ($\xi(i\cdot\gamma)$) of the additional sequence associated with a basic synchronization burst, said elements of said basic sequence being assigned to the elements of said additional sequence associated with the basic synchronization bursts in following their order in said basic sequence.

41. Network according to claim 38, **characterized in that** the means for the generation of said additional sequence comprise:

- first means for assigning an element ($\sigma(i\cdot\gamma+j)$) of the basic sequence to each element ($\xi(i\cdot\gamma+j)$ with (j∈{1,2,..., γ-1})) of the additional sequence not associated with a basic synchronization burst (j≠0), the succession of the elements of the basic sequence being reproduced iteratively in said additional sequence in circularly taking up the elements of said basic sequence and in starting from the first element($\sigma(0)$) of said basic sequence; and
- reassigning means for reassigning an element ($\sigma(i)$) of the basic sequence to each element ($\xi(i\cdot\gamma)$) of the additional sequence associated with a basic synchronization burst, said elements of said basic sequence being reassigned to the elements of said additional sequence associated with the basic synchronization bursts in following their order in said basic sequence, the reassigned element replacing, in said additional sequence, the element assigned during said assigning step.

42. Network according to claim 38, **characterized in that** said means for the generation of said additional sequence comprise:

- first means for assigning an element ($\sigma(i\cdot(\gamma-1)+j-1)$) of the basic sequence to each element ($\xi(i\cdot\gamma+j)$ with (j∈{1,2,...,γ-1})) of the additional sequence not associated with a basic synchronization burst (j≠0), the succession of the elements of the basic sequence being reproduced iteratively in said additional sequence restricted to the elements not associated with a basic synchronization burst, in circularly taking up the elements of said basic sequence and in starting from the first element ($\sigma(0)$) of said basic sequence; and
- second assigning means for assigning an element ($\sigma(i)$) of the basic sequence to each element ($\xi(i\cdot\gamma)$) of the additional sequence associated with a basic synchronization burst, said elements of said basic sequence being assigned to the elements of said additional sequence associated with the basic synchronization bursts in following their order in said basic sequence.

43. Network according to claim 38, **characterized in that** said means for the generation of said additional sequence comprise assigning means for assigning, for each time slot, an element ($\sigma(i+j\cdot\delta)$) of the basic sequence to an element ($\xi(i\cdot\gamma+j)$ with j∈{0,1,2,...,γ-1}) of the additional sequence, said elements of said basic sequence being assigned to the elements of said additional sequence in starting from the element ($\sigma(i)$) corresponding to the basic synchronization burst of the time slot considered for said basic sequence and in incrementing the order of the element of the basic sequence to be assigned, after each assigning and by a constant value $\delta$, the basic sequence being travelled through circularly.

44. Network according to any of claims 26 to 43, in which a mobile station is synchronized with a first base station, **characterized in that** it furthermore comprises a control unit to pilot said plurality of base stations in such a way that each of said base stations can selectively take a state corresponding to periods of transmission of useful signals, especially synchronization signals and data signals, to said at least one mobile station and a state corresponding to periods called periods of non-transmission during which said base station stops transmitting useful signals to said mobile station and **in that**, to synchronize said mobile station with a second base station, the control unit pilots the base stations in such a way that, if the carrier frequency of the useful signals transmitted by the new base station is different from that of the useful signals transmitted by the first base station, the periods of non-transmission of said first base station to said mobile station coincide with the reinforced synchronization interval (RSI) of said new base station.

45. Network according to one of claims 26 to 35, comprising at least three base stations, **characterized in that** it furthermore comprises a control unit to pilot said at least three base stations in such a way that each of said base stations can selectively take a state corresponding to periods of transmission of useful signals, especially synchronization signals and data signals, to said at least one mobile station and a state corresponding to periods called periods of silence during which no signal is transmitted, and **in that**, to determine the position of a mobile station of the network, the control unit pilots said at least three base stations in such a way that they transmit synchronization bursts during respective reinforced synchronization intervals (RSI) that are not systematically overlapping and that the reinforced synchronization intervals (RSI) of each of these base stations correspond to periods of silence for at least one of the remaining base stations, and

**in that** said mobile station, through one of said at least three base stations, transmits to said control unit information on the reception of the synchronization bursts of each of the reinforced synchronization intervals so that said control unit determines the position of said mobile station.

**FIG.1**

**FIG.2**

**FIG.3**

# FIG.4

**FIG.5**

# FIG.6

# FIG.7

# FIG.8

**FIG.9**

**FIG.10**

| 0 | 1 | 2 | 3 | 4 | 5 | 6 | 7 | 8 | 9 | 10 | 11 | 12 | 13 | 14 |

11 9 7 5 3 1 14 12 10 8 6 4 2

D

# FIG.11

**FIG.12**

**FIG.13**

**FIG.14**

**FIG.15**

**FIG.16**